(19) Europäisches Patentamt
European Patent Office
Office européen des brevets

(11) EP 4 400 204 A1

(12) EUROPEAN PATENT APPLICATION
published in accordance with Art. 153(4) EPC

(43) Date of publication:
**17.07.2024 Bulletin 2024/29**

(21) Application number: **22864328.4**

(22) Date of filing: **22.08.2022**

(51) International Patent Classification (IPC):
***B01D 69/00*** (2006.01) ***B01D 69/10*** (2006.01)
***B01D 69/12*** (2006.01) ***B01D 71/32*** (2006.01)
***B01D 71/34*** (2006.01) ***B01D 71/40*** (2006.01)

(52) Cooperative Patent Classification (CPC):
**B01D 69/00; B01D 69/10; B01D 69/12; B01D 71/32; B01D 71/34; B01D 71/40;** Y02C 20/40

(86) International application number:
**PCT/JP2022/031637**

(87) International publication number:
**WO 2023/032744 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.09.2021 JP 2021144903**

(71) Applicant: **NITTO DENKO CORPORATION**
**Ibaraki-shi**
**Osaka 567-8680 (JP)**

(72) Inventors:
- **ITO, Yuri**
  **Ibaraki-shi, Osaka 567-8680 (JP)**
- **SHIMIZU, Hisae**
  **Ibaraki-shi, Osaka 567-8680 (JP)**
- **TANI, Kensuke**
  **Ibaraki-shi, Osaka 567-8680 (JP)**
- **IHARA, Terukazu**
  **Ibaraki-shi, Osaka 567-8680 (JP)**
- **KAMIO, Eiji**
  **Kobe-shi, Hyogo 657-8501 (JP)**
- **ZHANG, Jinhui**
  **Kobe-shi, Hyogo 657-8501 (JP)**
- **MATSUYAMA, Hideto**
  **Kobe-shi, Hyogo 657-8501 (JP)**

(74) Representative: **Hoffmann Eitle**
**Patent- und Rechtsanwälte PartmbB**
**Arabellastraße 30**
**81925 München (DE)**

(54) **SEPARATION FUNCTION LAYER, SEPARATION MEMBRANE, AND PRODUCTION METHOD FOR SEPARATION FUNCTION LAYER**

(57) The present invention provides a separation functional layer that exhibits suppressed leakage of an ionic liquid and has an enhanced strength. A separation functional layer 1 of the present invention includes: an ionic liquid L; a polymer A that forms a crystal structure in the ionic liquid L; and a polymer B different from the polymer A. A separation membrane 10 of the present invention includes: the separation functional layer 1; and a porous support member 3 supporting the separation functional layer 1.

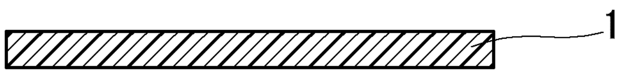


FIG.1

EP 4 400 204 A1

## Description

### TECHNICAL FIELD

The present invention relates to a separation functional layer, a separation membrane, and a method for manufacturing a separation functional layer.

### BACKGROUND ART

A membrane separation method has been developed as a method for separating an acid gas such as carbon dioxide from a gas mixture containing the acid gas. The membrane separation method allows an efficient separation of an acid gas with a suppressed operation cost, compared with an absorption method according to which an acid gas contained in a gas mixture is absorbed by an absorbent to be separated.

Separation membranes used in the membrane separation method include a composite membrane in which a separation functional layer is formed on a porous support member. For example, Patent Literature 1 discloses a composite membrane including a structural body, as a separation functional layer, that includes an ionic liquid. In Patent Literature 1, the separation functional layer includes, in addition to the ionic liquid, a polymer network structure and an inorganic particle network structure formed from inorganic particles.

### CITATION LIST

#### Patent Literature

Patent Literature 1: JP 2020-37688 A

### SUMMARY OF INVENTION

#### Technical Problem

Conventional separation functional layers including an ionic liquid are required to have an enhanced strength while exhibiting suppressed leakage of the ionic liquid.

Therefore, the present invention is intended to provide a separation functional layer that exhibits suppressed leakage of an ionic liquid and has an enhanced strength.

#### Solution to Problem

The present invention provides a separation functional layer including:

an ionic liquid;
a polymer A that forms a crystal structure in the ionic liquid; and
a polymer B different from the polymer A.

The present invention further provides a separation functional layer including:

an ionic liquid;
a polymer A that is a fluorine-based polymer; and
a polymer B different from the polymer A.

The present invention further provides a method for manufacturing a separation functional layer including an ionic liquid, a polymer A that forms a crystal structure in the ionic liquid, and a polymer B different from the polymer A, the method including
at least one selected from the group consisting of step (i) and step (ii) below.

Step (i): allowing, in a mixed solution M1 containing the ionic liquid, the polymer A, a prepolymer, and a crosslinking agent, the prepolymer to react with the crosslinking agent in such a manner that the polymer B is formed.

Step (ii): drying a mixed solution M2 containing the ionic liquid, the polymer A, and the polymer B.

Advantageous Effects of Invention

The present invention makes it possible to provide a separation functional layer that exhibits suppressed leakage of an ionic liquid and has an enhanced strength.

BRIEF DESCRIPTION OF DRAWINGS

FIG. 1 is a cross-sectional view of a separation functional layer according to an embodiment of the present invention.
FIG. 2 is a cross-sectional view of a separation membrane according to an embodiment of the present invention.
FIG. 3A is a schematic cross-sectional view for explaining a press test.
FIG. 3B is a schematic cross-sectional view for explaining the press test.
FIG. 4 is a schematic cross-sectional view of a membrane separation device including the separation membrane of the present invention.
FIG. 5 is a perspective view schematically showing a modification of the membrane separation device including the separation membrane of the present invention.
FIG. 6 is a scanning electron microscope (SEM) image of a surface of the separation functional layer after a separation membrane of Comparative Example 1 was subjected to the press test.
FIG. 7 is a scanning electron microscope (SEM) image of a surface of the separation functional layer after a separation membrane of Comparative Example 2 was subjected to the press test.

DESCRIPTION OF EMBODIMENTS

A separation functional layer according to a first aspect of the present invention includes:

an ionic liquid;
a polymer A that forms a crystal structure in the ionic liquid; and
a polymer B different from the polymer A.

According to a second aspect of the present invention, for example, in the separation functional layer according to the first aspect, the polymer A is a fluorine-based polymer.

A separation functional layer according to a third aspect of the present invention includes:

an ionic liquid;
a polymer A that is a fluorine-based polymer; and
a polymer B different from the polymer A.

According to a fourth aspect of the present invention, for example, in the separation functional layer according to any one of the first to third aspects, the polymer B has a crosslinked structure.

According to a fifth aspect of the present invention, for example, in the separation functional layer according to any one of the first to fourth aspects, the polymer A and the polymer B form an interpenetrating polymer network structure.

According to a sixth aspect of the present invention, for example, in the separation functional layer according to any one of the first to fifth aspects, the polymer A is a copolymer of a monomer a1 partially fluorinated and a monomer a2 fully fluorinated.

According to a seventh aspect of the present invention, for example, in the separation functional layer according to any one of the first to sixth aspects, the polymer A is a copolymer of vinylidene fluoride and hexafluoropropylene.

According to an eighth aspect of the present invention, for example, in the separation functional layer according to any one of the first to seventh aspects, the polymer B is a (meth)acrylic polymer.

According to a ninth aspect of the present invention, for example, in the separation functional layer according to any one of the first to eighth aspects, the polymer B includes at least one selected from the group consisting of a structure derived from a copolymer of N,N-dimethylacrylamide and N-acryloyloxysuccinimide, and a structure derived from a copolymer of n-butyl (meth)acrylate and (meth)acrylic acid.

According to a tenth aspect of the present invention, for example, in the separation functional layer according to any one of the first to ninth aspects, the polymer B is a crosslinked product obtained by using at least one crosslinking agent selected from the group consisting of an amine-based crosslinking agent and an epoxy-based crosslinking agent.

According to an eleventh aspect of the present invention, for example, in the separation functional layer according

to any one of the first to tenth aspects, the ionic liquid contains an imidazolium ion.

According to a twelfth aspect of the present invention, for example, in the separation functional layer according to any one of the first to eleventh aspects, the ionic liquid contains at least one selected from the group consisting of 1-ethyl-3-methylimidazolium bis(trifluoromethanesulfonyl)imide, 1-ethyl-3-methylimidazolium dicyanamide, and 1-ethyl-3-methylimidazolium bis(fluorosulfonyl)imide.

According to a thirteenth aspect of the present invention, for example, in the separation functional layer according to any one of the first to twelfth aspects, a content of the ionic liquid is 60 wt% or more.

According to a fourteenth aspect of the present invention, for example, the separation functional layer according to any one of the first to thirteen aspects is for use in separating carbon dioxide from a gas mixture containing carbon dioxide and nitrogen.

A separation membrane according to a fifteenth aspect of the present invention includes:

the separation functional layer according to any one of the first to fourteenth aspects; and
a porous support member supporting the separation functional layer.

According to a sixteenth aspect of the present invention, for example, in the separation functional layer according to the fifteenth aspect, when the separation membrane is subjected to a press test, a lowering rate of a separation factor $\alpha$ of the separation membrane for carbon dioxide with respect to nitrogen is 20% or less,
the press test being conducted by applying a compressive load of 5 $N/cm^2$ to the separation membrane for 1 hour.

A method for manufacturing a separation functional layer according to a seventeenth aspect of the present invention including an ionic liquid, a polymer A that forms a crystal structure in the ionic liquid, and a polymer B different from the polymer A includes at least one selected from the group consisting of step (i) and step (ii) below.

Step (i): allowing, in a mixed solution M1 containing the ionic liquid, the polymer A, a prepolymer, and a crosslinking agent, the prepolymer to react with the crosslinking agent in such a manner that the polymer B is formed.

Step (ii): drying a mixed solution M2 containing the ionic liquid, the polymer A, and the polymer B.

The present invention will be described in detail below. The following description is not intended to limit the present invention to a specific embodiment.

<Embodiment of separation functional layer>

FIG. 1 is a cross-sectional view of a separation functional layer 1 of the present embodiment. The separation functional layer 1 includes: an ionic liquid L; a polymer A that forms a crystal structure in the ionic liquid L; and a polymer B different from the polymer A. Specifically, the polymer A and the polymer B have different compositions. In the present description, the ionic liquid refers to a salt (ionic compound) that is liquid at 25°C.

The separation functional layer 1 of FIG. 1 can function as a self-supporting membrane (single-layer membrane). The separation functional layer 1 allows an acid gas contained in a gas mixture to preferentially permeate therethrough.

In the separation functional layer 1, the polymer A and the polymer B preferably form an interpenetrating polymer network (IPN) structure. Specifically, in the separation functional layer 1, a first network structure composed of the polymer A and a second network structure composed of the polymer B are entangled with each other, for example. The ionic liquid L is present in a space between these network structures and fills the space, for example.

(ionic liquid)

The ionic liquid L included in the separation functional layer 1 contains, for example, at least one selected from the group consisting of an imidazolium ion, a pyridinium ion, an ammonium ion, and a phosphonium ion, and preferably contains an imidazolium ion. These ions include, for example, a substituent having one or more carbon atoms.

Examples of the substituent having one or more carbon atoms include an alkyl group having 1 to 20 carbon atoms, a cycloalkyl group having 3 to 14 carbon atoms, and an aryl group having 6 to 20 carbon atoms, and these may be each further substituted by a hydroxy group, a cyano group, an amino group, a monovalent ether group, or the like (for example, a hydroxyalkyl group having 1 to 20 carbon atoms). Examples of the ether group include a polyalkylene glycol group such as polyethylene glycol.

Examples of the alkyl group having 1 to 20 carbon atoms include a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosadecyl group, an i-propyl group, a sec-butyl group, an i-butyl group, a 1-methylbutyl group, a 1-ethylpropyl group, a 2-methylbutyl group, an i-pentyl group, a neopentyl group, a 1,2-dimethylpropyl group, a 1,1-dimethylpropyl group, a t-pentyl group, a 2-ethylhexyl group, and a 1 ,5-dimethylhexyl group. These may be each further substituted by a hydroxy group, a

cyano group, an amino group, a monovalent ether group, or the like.

The above alkyl group may be substituted by a cycloalkyl group. The number of carbon atoms in the alkyl group substituted by the cycloalkyl group is, for example, 1 or more and 20 or less. Examples of the alkyl group substituted by the cycloalkyl group include a cyclopropyl methyl group, a cyclobutyl methyl group, a cyclohexyl methyl group, and a cyclohexyl propyl group. These may be each further substituted by a hydroxy group, a cyano group, an amino group, a monovalent ether group, or the like.

Examples of the cycloalkyl group having 3 to 14 carbon atoms include a cyclopropyl group, a cyclobutyl group, a cyclopentyl group, a cyclohexyl group, a cycloheptyl group, a cyclooctyl group, a cyclododecyl group, a norbornyl group, a bornyl group, and an adamantyl group. These may be each further substituted by a hydroxy group, a cyano group, an amino group, a monovalent ether group, or the like.

Examples of the aryl group having 6 to 20 carbon atoms include a phenyl group, a toluyl group, a xylyl group, a mesityl group, an anisyl group, a naphthyl group, and a benzyl group. These may be each further substituted by a hydroxy group, a cyano group, an amino group, a monovalent ether group, or the like.

In the present embodiment, the ionic liquid L preferably contains an imidazolium ion represented by the following formula (1).

[Chemical Formula 1]

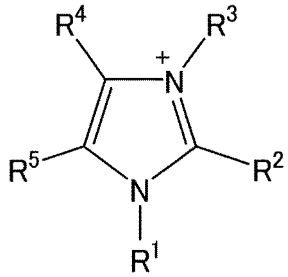

(1)

In the formula (1), $R^1$ to $R^5$ are each independently a hydrogen atom or the above substituent having one or more carbon atoms. $R^1$ is preferably a substituent having one or more carbon atoms, more preferably an alkyl group having 1 to 20 carbon atoms, even more preferably an alkyl group having 2 to 10 carbon atoms, and particularly preferably an ethyl group or an n-butyl group. $R^3$ is preferably a substituent having one or more carbon atoms, more preferably an alkyl group having 1 to 20 carbon atoms, even more preferably an alkyl group having 1 to 10 carbon atoms, and particularly preferably a methyl group. $R^2$, $R^4$, and $R^5$ are each preferably a hydrogen atom.

In the ionic liquid, the above ion may form a salt with a counter anion. Examples of the counter anion include alkyl sulfate, tosylate, methanesulfonate, trifluoromethanesulfonate, toluenesulfonate, acetate, bis(fluorosulfonyl)imide, bis(trifluoromethanesulfonyl)imide, thiocyanate, dicyanamide, tricyanomethanide, tetracyanoborate, hexafluorophosphate, tetrafluoroborate, and halide. Preferable examples of the counter anion include bis(trifluoromethanesulfonyl)imide, dicyanamide, and bis(fluorosulfonyl)imide.

Specific examples of the ionic liquid include 1-ethyl-3-methylimidazolium bis(trifluoromethanesulfonyl)imide, 1-ethyl-3-methylimidazolium bis(fluorosulfonyl)imide, 1-ethyl-3-methylimidazolium dicyanamide, 1-butyl-3-methylimidazolium bromide, 1-butyl-3-methylimidazolium chloride, 1-butyl-3-methylimidazolium tetrafluoroborate, 1-butyl-3-methylimidazolium hexafluorophosphate, 1-butyl-3-methylimidazolium trifluoromethanesulfonate, 1-butyl-3-methylimidazolium tetrachloroferrate, 1-butyl-3-methylimidazolium iodide, 1-butyl-2,3-dimethylimidazolium chloride, 1-butyl-2,3-dimethylimidazolium hexafluorophosphate, 1-butyl-2,3-dimethylimidazolium tetrafluoroborate, 1-butyl-3-methylimidazolium bis(trifluoromethanesulfonyl)imide, 1-butyl-2,3-dimethylimidazolium bis(trifluoromethanesulfonyl)imide, 1-butyl-3-methylimidazolium trifluoro(trifluoromethyl)borate, 1-butyl-3-methylimidazolium tribromide, 1,3-dimesitylimidazolium chloride, 1,3-bis(2,6-diisopropylphenyl)imidazolium chloride, 1,3-diisopropylimidazolium tetrafluoroborate, 1,3-di-tert-butylimidazolium tetrafluoroborate, 1,3-dicyclohexylimidazolium tetrafluoroborate, 1,3-dicyclohexylimidazolium chloride, 1,2-dimethyl-3-propylimidazolium iodide, 1-hexyl-3-methylimidazolium chloride, 1-hexyl-3-methylimidazolium hexafluorophosphate, 1-hexyl-3-methylimidazolium tetrafluoroborate, 1-hexyl-3-methylimidazolium bromide, 1-methyl-3-propylimidazolium iodide, 1-methyl-3-n-octylimidazolium bromide, 1-methyl-3-n-octylimidazolium chloride, 1-methyl-3-n-octylimidazolium hexafluorophosphate, 1-methyl-3-[6-(methylsulfinyl)hexyl]imidazolium p-toluenesulfonate, 1-ethyl-3-methylimidazolium tricyanomethanide, 1-ethyl-3-methylimidazolium tetracyanoborate, and 1-(2-hydroxyethyl)-3-methylimidazolium bis(trifluoromethanesulfonyl)imide.

Particularly, the ionic liquid preferably contains at least one selected from the group consisting of 1-ethyl-3-methylimidazolium bis(trifluoromethanesulfonyl)imide ([EMIM][$Tf_2N$]), 1-ethyl-3-methylimidazolium dicyanamide ([EMIM][DCA]), and 1-ethyl-3-methylimidazolium bis(fluorosulfonyl)imide ([EMIM][FSI]).

From the viewpoint of gas separation performance, the content of the ionic liquid L in the separation functional layer 1 is, for example, 5 wt% or more, preferably 30 wt% or more, more preferably 50 wt% or more, still more preferably 60 wt% or more, particularly preferably 70 wt% or more, and especially preferably 80 wt% or more. The higher the content of the ionic liquid L is, the more enhanced separation performance the separation functional layer 1 tends to have. The upper limit of the content of ionic liquid L is, for example, but not particularly limited to, 95 wt%, and may be 90 wt%. When the content of the ionic liquid L is 95 wt% or less, the self-supporting property of the separation functional layer 1 tends to be secured.

(Polymer A)

As described above, the polymer A forms a crystal structure in the ionic liquid L. In other words, the polymer A is crystallized in the ionic liquid L. In the ionic liquid L, the polymer A may be fully crystallized or partially crystallized. The phrase "the polymer A forms a crystal structure in the ionic liquid L" means that when a sample including the polymer A and the ionic liquid L is subjected to an X-ray diffraction (XRD) measurement at a room temperature (25°C), a peak derived from a crystal structure of the polymer A can be observed. The sample used for the XRD measurement is prepared by dissolving 1.3 g of the polymer A in a liquid mixture composed of 5 g of the ionic liquid L and 10.24 g of acetone, drying the obtained solution at 30°C for 24 hours, and then further drying the solution at 70°C for 24 hours. The solution can be dried using a laboratory dish made from polytetrafluoroethylene (PTFE).

The crystallization of the polymer A is derived from the fact that a plurality of molecules of the polymer A are physically crosslinked in the ionic liquid L. The physical crosslinking means that a plurality of polymer molecules are aggregated by an interaction such as an intermolecular force. It can be said that the polymer A has a physical crosslinking point in the ionic liquid L. Note that the polymer A does not have a chemically crosslinked structure, for example. The chemical crosslinking means that a plurality of polymer molecules are bonded to each other via a covalent bond.

The polymer A is typically a fluorine-based polymer. The fluorine-based polymer is a polymer having a structural unit S derived from a fluorinated monomer a. The fluorine-based polymer may have the structural unit S, as a main component, derived from the fluorinated monomer a and be composed substantially of the structural unit S alone, for example. In the present description, the term "main component" refers to a structural unit having, on weight basis, a largest content among all the structural units constituting the fluorine-based polymer. Note that the fluorine-based polymer may further include an additional structural unit other than the structural unit S.

In another aspect, the present invention provides the separation functional layer 1 including:

the ionic liquid L;
the polymer A that is a fluorine-based polymer; and
the polymer B different from the polymer A.

The monomer a has, for example, a carbon-carbon double bond as a polymerizable group. Typically, the monomer a is fluorinated olefin. The monomer a may include an additional hetero atom other than a fluorine atom, but preferably it does not include the additional one. The number of carbon atoms in the monomer a is, for example, but not particularly limited to, 2 to 10, and preferably 2 to 5.

The monomer a may be partially fluorinated or fully fluorinated. In one example, the polymer A may include at least one selected from the group consisting of a structural unit S1 derived from a monomer a1 partially fluorinated and a structural unit S2 derived from a monomer a2 fully fluorinated. The polymer A preferably includes both of the structural unit S1 and the structural unit S2.

The polymer A is preferably a copolymer of the monomer a1 partially fluorinated and the monomer a2 fully fluorinated. This copolymer may be a random copolymer, a block copolymer, an alternating copolymer, a graft copolymer, or the like. Preferred is a random copolymer or a block copolymer. The polymer A that is a block copolymer includes, for example, a first block composed of the structural unit S1 derived from the monomer a1 partially fluorinated and a second block composed of the structural unit S2 derived from the monomer a2 fully fluorinated.

Typically, the monomer a1 partially fluorinated is olefin partially fluorinated. Example of such olefin include vinylidene fluoride, vinyl fluoride, and chlorotrifluoroethylene, and preferred is vinylidene fluoride.

Typically, the monomer a2 fully fluorinated is olefin fully fluorinated. Example of such olefin include hexafluoropropylene and tetrafluoroethylene, and preferred is hexafluoropropylene.

The polymer A is preferably a copolymer of vinylidene fluoride and hexafluoropropylene, and particularly preferably a random copolymer or a block copolymer of these. In this copolymer, a structural unit derived from vinylidene fluoride tends to exhibit high crystallinity in the ionic liquid L. Particularly, the copolymer of vinylidene fluoride and hexafluoropropylene can form a crystal structure in the ionic liquid L such as [EMIM][$Tf_2N$], [EMIM][DCA], [EMIM][FSI].

In the polymer A, the content of the structural unit S1 derived from the monomer a1 partially fluorinated is, for

example, but not particularly limited to, 1 wt% to 99 wt%. The content of the structural unit S2 derived from the monomer a2 fully fluorinated is, for example, but not particularly limited to, 1 wt% to 99 wt%.

The weight-average molecular weight of the polymer A is, for example, but not particularly limited to, 10000 to 1000000. For example, a molecular weight distribution of the polymer A is measured by gel permeation chromatograph (GPC) including a differential refractive index detector (RID) so that the weight-average molecular weight of the polymer A can be calculated from the obtained chromatogram (chart) using a calibration curve of standard polystyrene.

The melting point of the polymer A is, for example, but not particularly limited to, 130°C or higher, and preferably 140°C or higher. The upper limit of the melting point of the polymer A is, for example, but not particularly limited to, 180°C. The melting point of the polymer A can be measured using a commercially available differential scanning calorimeter.

In another aspect, the present invention provides the separation functional layer 1 including:

the ionic liquid L;
the polymer A having a melting point of 130°C or higher; and
the polymer B having a crosslinked structure.

The content of the polymer A in the separation functional layer 1 is, for example, but not particularly limited to, 1 wt% or more, preferably 5 wt% or more, and more preferably 10 wt% or more. The higher the content of the polymer A is, the more enhanced strength the separation functional layer 1 tends to have. The upper limit of the content of the polymer A is, for example, but not particularly limited to, 20 wt%, and may be 15 wt%.

(Polymer B)

The polymer B is not particularly limited as long as it is different from the polymer A. The polymer B does not need to have a crosslinked structure, but preferably has a crosslinked structure. The crosslinked structure that the polymer B has is, for example, a chemically crosslinked structure. In other words, the polymer B is, for example, a crosslinked product of a prepolymer. In the present description, the polymer B may be simply referred to as a crosslinked product. That the polymer B has a crosslinked structure can be determined by, for example, measuring a gel fraction of the polymer B. The polymer B forms no crystal structure in the ionic liquid L, for example. In other words, the polymer B has a higher solubility in the ionic liquid L than that of the polymer A.

The weight-average molecular weight (Mw) of the polymer B is, for example, 5000 or more, preferably 10000 or more, more preferably 20000 or more, and still more preferably 40000 or more. The upper limit of the weight-average molecular weight of the polymer B is, for example, but not particularly limited to, 5000000, preferably 2000000, and more preferably 1500000. When the weight-average molecular weight of the polymer B is 40000 or more, the separation functional layer 1 tends to have an enhanced mechanical strength. For example, a molecular weight distribution of the polymer B is measured by gel permeation chromatograph (GPC) including a differential refractive index detector (RID) so that the weight-average molecular weight of the polymer B can be calculated from the obtained chromatogram (chart) using a calibration curve of standard polystyrene.

As described above, in a preferred embodiment of the present invention, the polymer B is a crosslinked product of a prepolymer, for example. Hereinafter, an aspect in which the polymer B is a crosslinked product of a prepolymer will be explained in detail.

[Prepolymer]

A prepolymer for forming the polymer B has a polymer chain including a structural unit derived from a monomer. This polymer chain is formed by, for example, radical polymerization of a monomer. In a crosslinked product of the prepolymer, a plurality of the polymer chains are crosslinked via a crosslinking chain. The polymer chain and the crosslinking chain are preferably bonded to each other by at least one bond selected from the group consisting of hydrazone bond, amide bond, imide bond, urethane bond, ether bond, and ester bond.

The prepolymer may be a homopolymer, a copolymer, or a mixture of these. Examples of the copolymer include a random copolymer, a block copolymer, an alternating copolymer, and a graft copolymer. In one example, the prepolymer may include a (meth)acrylic polymer. The (meth)acrylic polymer is a polymer having a structural unit U derived from a monomer b including a (meth)acrylic group and/or a (meth)acrylamide group. The (meth)acrylic polymer may have the structural unit U, as a main component, derived from the monomer b and be composed substantially of the structural unit U alone, for example. However, the (meth)acrylic polymer may further include an additional structural unit other than the structural unit U. Note that in the present description, the term "(meth)acrylic" means acrylic and/or methacrylic. Usually, when a prepolymer includes a (meth)acrylic polymer, a crosslinked product of the prepolymer can also be referred to as a (meth)acrylic polymer. That is, the polymer B may be a (meth)acrylic polymer.

The prepolymer is preferably a polymer having a crosslinking point that can react with the later-described crosslinking agent. The crosslinking point is located at an end, a principal chain, or a side chain of the prepolymer. From the viewpoint that a crosslinked product crosslinked highly three-dimensionally can be obtained, the crosslinking point is preferably located at a side chain of the prepolymer.

The prepolymer preferably has a functional group, particularly a polar group, that functions as the crosslinking point. The polar group refers to an atomic group including an atom other than a carbon atom and a hydrogen atom, and typically refers to an atomic group including at least one selected from the group consisting of an N atom and an O atom. When the prepolymer has the polar group, it is possible to obtain easily a crosslinked product crosslinked highly three-dimensionally. Also, the crosslinked product of the prepolymer having the polar group tends to be able to hold the ionic liquid in a stable manner.

Examples of the polar group include an amino group, an amide group, an imide group, a morpholino group, a carboxyl group, an ester group, a hydroxyl group, and an ether group. Examples of the amino group include not only a primary amino group but also a secondary amino group and a tertiary amino group that are substituted by an alkyl group or the like. Examples of the amide group include a (meth)acrylamide group, an acetamide group, and a pyrrolidone group. Examples of the ether group include: a polyalkyl ether group such as a polyethylene glycol group or a polypropylene glycol group; an epoxy group; and a vinyloxy group.

The prepolymer preferably includes a structural unit derived from a polar group-containing monomer. The polar group-containing monomer preferably includes, for example, at least one selected from the group consisting of an amide group-containing monomer, an imide group-containing monomer, an amino group-containing monomer, an epoxy group-containing monomer, a vinyloxy group-containing monomer, a carboxyl group-containing monomer, and a hydroxyl group-containing monomer. More preferably, the polar group-containing monomer includes at least one selected from the group consisting of an amide group-containing monomer, an imide group-containing monomer, a vinyloxy group-containing monomer, and a carboxyl group-containing monomer.

Examples of the amide group-containing monomer include acrylamide, methacrylamide, N-vinylpyrrolidone, N,N-diallylacrylamide, N-methylacrylamide, N,N-dimethylacrylamide, N,N-dimethylmethacrylamide, N,N-diethylacrylamide, N,N-diethylmethacrylamide, N,N'-methylenebisacrylamide, N,N-dimethylaminopropylacrylamide, N,N-dimethylaminopropyl methacrylamide, and diacetone acrylamide.

Examples of the imide group-containing monomer include N-(meth)acryloyloxy succinimide, N-(meth)acryloyloxy methylenesuccinimide, and N-(meth)acryloyloxy ethylenesuccinimide.

Examples of the amino group-containing monomer include aminoethyl (meth)acrylate, N,N-dimethylaminoethyl (meth)acrylate, and N,N-dimethylaminopropyl (meth)acrylate.

Examples of the epoxy group-containing monomer include glycidyl (meth)acrylate, methylglycidyl (meth)acrylate, 3-ethyloxetane-3-yl(meth)acrylate, and allyl glycidyl ether.

Examples of the vinyloxy group-containing monomer include (meth)acrylic acid 2-(2-vinyloxyethoxy) ethyl, (meth)acrylic acid 2-vinyloxyethyl, and (meth)acrylic acid 4-vinyloxypropyl.

Examples of the carboxyl group-containing monomer include (meth)acrylic acid.

Examples of the hydroxyl group-containing monomer include 4-hydroxybutyl (meth)acrylate.

One of these polar group-containing monomers may be used alone or two or more of them may be used in combination. For example, the prepolymer may be formed by copolymerizing N-methylacrylamide or N,N-dimethylacrylamide (DMAAm) with N,N'-methylenebisacrylamide, diacetone acrylamide (DAAm), N-acryloyloxysuccinimide (NSA), or the like. In one example, the prepolymer may include a structural unit derived from N,N-dimethylacrylamide and a structural unit derived from N-acryloyloxysuccinimide, or may be a copolymer of N,N-dimethylacrylamide and N-acryloyloxysuccinimide.

The prepolymer may include a structural unit derived from a monomer other than the polar group-containing monomer. Examples of the other monomer include alkyl (meth)acrylate such as methyl (meth)acrylate or n-butyl (meth)acrylate. In one example, the prepolymer may include a structural unit derived from n-butyl (meth)acrylate and a structural unit derived from (meth)acrylic acid, or may be a copolymer of n-butyl (meth)acrylate and (meth)acrylic acid.

The polymer B includes, for example, at least one selected from the group consisting of a structure derived from a copolymer of N,N-dimethylacrylamide and N-acryloyloxysuccinimide, and a structure derived from a copolymer of n-butyl (meth)acrylate and (meth)acrylic acid. The polymer B preferably includes a structure derived from a copolymer of N,N-dimethylacrylamide and N-acryloyloxysuccinimide.

The prepolymer may include a structural unit that functions as a crosslinking agent, such as a structural unit derived from polyfunctional (meth)acrylate. The prepolymer having this structural unit is self-crosslinkable. The polyfunctional (meth)acrylate refers to a monomer having two or more (meth)acrylic groups in one molecule thereof. Examples of the polyfunctional (meth)acrylate include trimethylolpropane tri(meth)acrylate, pentaerythritol tetra(meth)acrylate, 1, 2-ethylene glycol di(meth)acrylate,1,6-hexanediol di(meth)acrylate, and dipentaerythritol hexaacrylate.

From the viewpoint of mechanical strength of the separation functional layer 1, the weight-average molecular weight (Mw) of the prepolymer is preferably 2500 or more, for example, and more preferably 5000 or more, and still

more preferably 10000 or more. The upper limit of the weight-average molecular weight of the prepolymer is, for example, but not particularly limited to, 2500000, preferably 1000000, and more preferably 750000. The weight-average molecular weight of the prepolymer can be specified by the method mentioned above for the crosslinked product.

The prepolymer can be obtained by, for example, polymerizing, in the presence of a polymerization initiator, a monomer having a functional group that functions as the crosslinking point. The polymerization of the monomer is preferably radical polymerization from the viewpoint of improving the flexibility and stretchability of the separation functional layer 1. The radical polymerization may be thermal polymerization, or may be photopolymerization (polymerization by UV irradiation, for example).

As the polymerization initiator, an azo-based polymerization initiator, a peroxide-based initiator, a redox-based initiator obtained by combining a peroxide and a reducing agent, a substituted ethane-based initiator or the like can be used. When photopolymerization is performed, various kinds of photopolymerization initiators can be used. A photosensitizer, such as 2-oxoglutaric acid, may be used for the photopolymerization.

Examples of the azo-based polymerization initiator include 2,2'-azobisisobutyronitrile (AIBN), 2,2'-azobis-2-methylbutyronitrile, dimethyl-2,2'-azobis(2-methyl propionate), 4,4'-azobis-4-cyanovaleric acid, azobisisovaleronitrile, 2,2'-azobis(2-amidinopropane) dihydrochloride, 2,2'-azobis[2-(5-methyl-2-imidazoline-2-yl) propane] dihydrochloride, 2,2'-azobis(2-methylpropionamidin) disulfate, and 2,2'-azobis(N,N'-dimethyleneisobutylamidine) dihydrochloride.

Examples of the peroxide-based initiator include: persulfate such as potassium persulfate or ammonium persulfate; dibenzoyl peroxide, t-butyl permaleate, t-butyl hydroperoxide, di-t-butyl peroxide, t-butylperoxy benzoate, dicumyl peroxide, 1,1-bis(t-butylperoxy)-3,3,5-trimethylcyclohexane, 1,1-bis(t-butylperoxy)cyclododecane, and hydrogen peroxide.

Examples of the redox-based initiator include a combination of a peroxide and ascorbic acid (such as a combination of a hydrogen peroxide solution and ascorbic acid), a combination of a peroxide and an iron(II) salt (such as a combination of a hydrogen peroxide solution and an iron(II) salt), and a combination of persulfate and sodium hydrogensulfite.

Examples of the substituted ethane-based initiator include phenyl-substituted ethane.

As the photopolymerization initiators, there can be mentioned an acetophenone-based photopolymerization initiator, a ketal-based photopolymerization initiator, a benzophenone-based photopolymerization initiator, a benzoin-based photopolymerization initiator, a benzoyl-based photopolymerization initiator, a xanthone-based photopolymerization initiator, active halogen compounds (a triazine-based photopolymerization initiator, a halomethyl oxadiazole-based photopolymerization initiator, and a coumarin-based photopolymerization initiator), an acridine-based photopolymerization initiator, a biimidazole-based photopolymerization initiator, and an oxime ester-based photopolymerization initiator.

Examples of the acetophenone-based photopolymerization initiator include 2,2-diethoxyacetophenone, p-dimethylaminoacetophenone, 2-hydroxy-2-methyl-1-phenylpropane-1-one, p-dimethylaminoacetophenone, 4'-isopropyl-2-hydroxy-2-methyl-propiophenone, 1-hydroxycyclohexyl phenyl ketone, 2-benzyl-2-dimethylamino-1-(4-morpholinophenyl)-1-butanone, 2-tolyl-2-dimethylamino-1-(4-morpholinophenyl)-1-butanone, and 2-methyl-1-[4-(methylthio)phenyl]-2-morpholino-1-propanone.

Examples of the ketal-based photopolymerization initiator include benzyl dimethylketal and benzyl-β-methoxyethyl acetal.

Examples of the benzophenone-based photopolymerization initiator include benzophenone, 4,4'-(bisdimethylamino)benzophenone, 4,4'-(bisdiethylamino)benzophenone, and 4,4'-dichlorobenzophenone.

Examples of the benzoin-based or the benzoyl-based photopolymerization initiator include benzoin isopropyl ether, benzoin isobutyl ether, benzoin methyl ether, and methyl o-benzoylbenzoate.

Examples of the xanthone-based photopolymerization initiator include diethylthioxanthone, diisopropylthioxanthone, monoisopropylthioxanthone, and chlorothioxanthone.

Examples of the triazine-based photopolymerization initiator include 2,4-bis(trichloromethyl)-6-p-methoxyphenyl-s-triazine, 2,4-bis(trichloromethyl)-6-p-methoxystyryl-s-triazine, 2,4-bis(trichloromethyl)-6-(1-p-dimethylaminophenyl)-1,3-butadienyl-s-triazine, 2,4-bis(trichloromethyl)-6-biphenyl-s-triazine, 2,4-bis(trichloromethyl)-6-(p-methylbiphenyl)-s-triazine, p-hydroxy ethoxystyryl-2,6-di(trichloromethyl)-s-triazine, methoxystyryl-2,6-di(trichloromethyl)-s-triazine, 3,4-dimethoxystyryl-2,6-di(trichloromethyl)-s-triazine, 4-benzoxolane-2,6-di(trichloromethyl)-s-triazine, 4-(o-bromo-p-N,N-(diethoxy carbonylamino)-phenyl)-2,6-di(chloromethyl)-s-triazine, and 4-(p-N,N-diethoxy carbonylamino)-phenyl)-2,6-di(chloromethyl)-s-triazine.

Examples of the halomethyl oxadiazole-based photopolymerization initiator include 2-trichloromethyl-5-styryl-1,3,4-oxodiazole, 2-trichloromethyl-5-(cyanostyryl)-1,3,4-oxodiazole, 2-trichloromethyl-5-(naphtho-1-yl)-1,3,4-oxodiazole, and 2-trichloromethyl-5-(4-styryl)styryl-1,3,4-oxodiazole.

Examples of the coumarin-based photopolymerization initiator include 3-methyl-5-amino-((s-triazine-2-yl)amino)-3-phenylcoumarin, 3-chloro-5-diethylamino-((s-triazine-2-yl)amino)-3-phenylcoumarin, and 3-butyl-5-dimethylamino-((s-triazine-2-yl)amino)-3-phenylcoumarin.

Examples of the acridine-based photopolymerization initiator include 9-phenylacridine and 1,7-bis(9-acridinyl)heptane.

Examples of the biimidazole-based photopolymerization initiator include: a lophine dimer such as a 2-(o-chlorophenyl)-4,5-diphenylimidazolyl dimer, a 2-(o-methoxypheny)-4,5-diphenylimidazolyl dimer, or a 2-(2,4-dimethoxyphenyl)-4,5-diphenylimidazolyl dimer; 2-mercaptobenzimidazole; and 2,2'-dibenzothiazolyl disulfide.

Examples of the oxime ester-based photopolymerization initiator include 1,2-octanedione 1-[4-(phenylthio)-2-(O-benzoyloxime)], and ethanone 1-[9-ethyl-6-(2-methylbenzoyl)-9H-carbazole-3-yl]-1-(O-acetyloxime).

One of these polymerization initiators can be used alone or two or more of them can be used in combination. The polymerization initiator is preferably 2,2'-azobisisobutyronitrile. An amount of the polymerization initiator is, for example, but not particularly limited to, 0.1 parts by mass or more, and preferably 0.3 parts by mass or more, with respect to 100 parts by mass of the monomer. The amount of the polymerization initiator is preferably 3 parts by mass or less, and more preferably 2 parts by mass or less, with respect to 100 parts by mass of the monomer.

The prepolymer may be synthesized in the presence of a solvent. As the solvent, an organic solvent is preferred, and examples thereof include: a ketone-based organic solvent such as acetone, methyl ethyl ketone, or methyl isobutyl ketone; an ester-based organic solvent such as methyl acetate, ethyl acetate, or butyl acetate; a polar solvent such as dimethylformamide, dimethyl sulfoxide, or N-methyl-2-pyrrolidone; an alcohol-based organic solvent such as methyl alcohol, ethyl alcohol, or isopropyl alcohol; an aromatic hydrocarbon-based organic solvent such as toluene or xylene; an aliphatic hydrocarbon-based or alicyclic hydrocarbon-based organic solvent such as n-hexane, cyclohexane, or methylcyclohexane; a cellosolve-based organic solvent such as methyl cellosolve, ethyl cellosolve, or butyl cellosolve; an ether-based organic solvent such as tetrahydrofuran or dioxane; and a carbitol-based organic solvent such as n-butyl carbitol or iso-amyl carbitol. One of these organic solvents can be used alone or two or more of them can be used in combination.

The method for synthesizing the prepolymer is not particularly limited and known methods such as solution polymerization, emulsion polymerization, block polymerization, suspension polymerization, atom transfer radical polymerization (ATRP), and reversible addition fragmentation chain transfer (RAFT) polymerization can be used. However, from the viewpoint of workability, solution polymerization is preferred. In one example, the prepolymer may be synthesized by photopolymerization in the presence of the solvent, or may be synthesized by photopolymerization, particularly UV polymerization, without the presence of the solvent.

Examples of the ATRP initiator include alkyl halide such as 2-bromoisobutyric acid tert-butyl ester, 2-bromoisobutyric acid methyl ester, 2-bromoisobutyryl bromide, 2-bromoisobutyric acid ethyl ester, 2-bromoisobutyric acid 2-hydroxyethyl ester, ethylene bis(2-bromoisobutyrate), 1-tris(hydroxymethyl)ethane, or pentaerythritol tetrakis(2-bromoisobutyrate).

Examples of a ligand for an ATRP catalyst include 2,2'-bipyridyl, 4,4'-dimethyl-2,2'-dipyridine, 4,4'-di-tert-butyl-2,2'-dipyridyl, 4,4'-dinonyl-2,2'-dipyridyl, N-butyl-2-pyridylmethanimine, N-octyl-2-pyridylmethanimine, N-dodecyl-N-(2-pyridylmethylene)amine, N-octadecyl-N-(2-pyridylmethylene)amine, and N,N,N',N",N"-pentamethyldiethylenetriamine.

Examples of a metal salt for the ATRP catalyst include copper(I) chloride, copper(II) chloride, copper(I) bromide, copper(II) bromide, titanium(II) chloride, titanium(III) chloride, titanium(IV) chloride, titanium(IV) bromide, and iron(II) chloride.

Examples of a RAFT agent include cyanomethyl-dodecyl trithiocarbonate, 2-(dodecylthiocarbonothioylthio)-2-methylpropionic acid, and 2-cyano-2-propyl dodecyl trithiocarbonate.

When the prepolymer is synthesized by thermal polymerization, the polymerization temperature is, for example, 25 to 80°C, preferably 30 to 70°C, and more preferably 40 to 60°C. When the prepolymer is synthesized by photopolymerization, the polymerization temperature is preferably 10 to 60°C, more preferably 20 to 50°C, and still more preferably 20 to 40°C.

When the prepolymer is synthesized by thermal polymerization,the duration of the polymerization is, for example, 1 to 100 hours, preferably20 to 80 hours, more preferably30 to 70 hours, and still more preferably 40 to 60 hours. When the prepolymer is synthesized by photopolymerization, the duration of the polymerization is, for example, 0.1 to 100 hours, preferably 1 to 70 hours, more preferably 5 to 40 hours, and still more preferably 10 to 30 hours.

When the prepolymer is synthesized by photopolymerization, the wavelength of ultraviolet rays to be used is not particularly limited as long as the monomer is radically polymerizable. The wavelength of ultraviolet rays can be selected from a wavelength range of 200 to 550 nm, for example, and it is preferably 250 to 500 nm, and more preferably 300 to 400 nm. The strength of the ultraviolet rays is not particularly limited. However, considering the duration of the polymerization and safety, it is, for example, 1 to 3000 mJ/($cm^2$•s), and preferably 10 to 2000 mJ/($cm^2$•s).

[Crosslinking agent]

The polymer B can be formed by a reaction between the prepolymer and a crosslinking agent, for example. However, when the prepolymer includes a structural unit that functions as a crosslinking agent, the polymer B can be

formed by a reaction between the prepolymers. The crosslinking agent can be suitably selected depending on a composition of the prepolymer, etc. Examples of the crosslinking agent include polyfunctional (meth)acrylate, a hydrazide-based crosslinking agent, an amine-based crosslinking agent, an isocyanate-based crosslinking agent, an epoxy-based crosslinking agent, an aziridine-based crosslinking agent, a melamine-based crosslinking agent, a metal chelate-based crosslinking agent, a metal salt-based crosslinking agent, a peroxide-based crosslinking agent, an oxazoline-based crosslinking agent, a urea-based crosslinking agent, a carbodiimide-based crosslinking agent, and a coupling agent-based crosslinking agent (such as a silane coupling agent). One of these crosslinking agents can be used alone or two or more of them can be used in combination. The polymer B is preferably a crosslinked product obtained by using at least one crosslinking agent selected from the group consisting of an amine-based crosslinking agent and an epoxy-based crosslinking agent. More preferably, the polymer B is a crosslinked product obtained by using an amine-based crosslinking agent, specifically a product obtained by a reaction between the prepolymer and an amine-based crosslinking agent.

As the polyfunctional (meth)acrylate, those stated above for the prepolymer can be mentioned.

Examples of the hydrazide-based crosslinking agent include multivalent hydrazides such as isophthalic acid dihydrazide, terephthalic acid dihydrazide, phthalic acid dihydrazide, 2,6-naphthalene dicarboxylic acid dihydrazide, naphthalene acid dihydrazide, oxalic acid dihydrazide, malonic acid dihydrazide, succinic acid dihydrazide, glutamic acid dihydrazide, adipic acid dihydrazide, pimelic acid dihydrazide, suberic acid dihydrazide, azelaic acid dihydrazide, sebacic acid dihydrazide, brassylic acid dihydrazide, dodecanedioic acid dihydrazide, acetonedicarboxylic acid dihydrazide, fumaric acid dihydrazide, maleic acid dihydrazide, itaconic acid dihydrazide, trimellitic acid dihydrazide, 1,3,5-benzenetricarboxylic acid dihydrazide, aconitic acid dihydrazide, and pyromellitic acid dihydrazide. Preferred is adipic acid dihydrazide.

Examples of the amine-based crosslinking agent include: aliphatic polyamines such as hexamethylenediamine, 1,12-dodecanediamine, hexamethylenediamine carbamate, N,N-dicinnamylidene-1,6-hexanediamine, tetramethylene pentamine, and a hexamethylene diamine cinnamaldehyde adduct; aromatic multivalent amines such as 4,4-methylenedianiline, m-phenylenediamine, 4,4-diaminodiphenyl ether, 3,4-diaminodiphenyl ether, 4,4-(m-phenylenediisopropylidene)dianyline, 4,4-(p-phenylenediisopropylidene)dianyline, 2,2-bis[4-(4-aminophenoxy)phenyl)]propane, 4,4-diaminobenzanilide, 4,4-bis(4-aminophenoxy)biphenyl, m-xylylenediamine, p-xylylenediamine, and 1,3,5-benzenetriamine; and diamines each having polyether in its main chain, such as polyethylene glycol diamine, polypropylene glycol diamine, and diethylene glycol bis(3-aminopropyl) ether. Preferred is diethylene glycol bis(3-aminopropyl) ether.

Examples of the isocyanate-based crosslinking agent include: aliphatic polyisocyanate such as 1, 6-hexamethylene diisocyanate, 1,4-tetramethylene diisocyanate, 2-methyl-1,5-pentane diisocyanate, 3-methyl-1,5-pentane diisocyanate, or lysine diisocyanate; alicyclic polyisocyanate such as isophorone diisocyanate, cyclohexyl diisocyanate, hydrogenated tolylene diisocyanate, hydrogenated xylene diisocyanate, hydrogenated diphenylmethane diisocyanate, or hydrogenated tetramethylxylene diisocyanate; aromatic polyisocyanate such as 2,4-tolylene diisocyanate, 2, 6-tolylene diisocyanate, 4,4'-diphenylmethane diisocyanate, 2,4'-diphenylmethane diisocyanate, 4,4'-diphenyl ether diisocyanate, 2-nitrodiphenyl-4,4'-diisocyanate, 2,2'-diphenylpropane-4,4'-diisocyanate, 3,3 '-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, 3,3'-dimethoxydiphenyl-4,4'-diisocyanate, xylylene-1,4-diisocyanate, or xylylene-1,3-diisocyanate.

As the isocyanate-based crosslinking agent, there also can be used dimers and trimers of the above-mentioned isocyanate-based compounds, and a product obtained by a reaction between or polymerization of the above-mentioned isocyanate-based compounds (such as a dimer and a trimer of diphenylmethane diisocyanate, a product obtained by a reaction between trimethylolpropane and tolylene diisocyanate, a product obtained by a reaction between trimethylolpropane and hexamethylene diisocyanate, polymethylene polyphenyl isocyanate, polyether polyisocyanate, and polyester polyisocyanate). As the isocyanate-based crosslinking agent, a product obtained by a reaction between trimethylolpropane and tolylene diisocyanate is preferred.

Examples of the epoxy-based crosslinking agent include an epoxy-based compound having two or more, or three or more epoxy groups in one molecule thereof, such as 1,3-bis(N,N-diglycidylaminomethyl)cyclohexane, N,N,N',N'-tetraglycidyl-m-xylenediamine, diglycidyl aniline, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthalic acid diglycidyl ester, triglycidyl-tris(2-hydroxyethyl) isocyanurate, resorcinol diglycidyl ether, bisphenol S diglycidyl ether, 1,3-bis(N,N-diglycidyl aminomethyl) benzene, 1,3-bis(N,N-diglycidyl aminomethyl) toluene, 1,3,5-triglycidyl isocyanurate, N,N,N',N'-tetraglycidyl-m-xylylenediamine, glycerol triglycidyl ether, or trimethylolpropane glycidyl ether. Preferred is 1,3-bis(N,N-diglycidylaminomethyl)cyclohexane.

As described above, the polymer B does not need to have a crosslinked structure or does not need to be a crosslinked product of the prepolymer. In another preferred embodiment of the present invention, the polymer B is a

(meth)acrylic polymer having no crosslinked structure. For example, the polymer B may include, as a main component, a structural unit derived from alkyl (meth)acrylate such as methyl (meth)acrylate or n-butyl (meth)acrylate, and may be composed substantially of the structural unit alone. The polymer B may have the composition and structure mentioned above for the prepolymer.

The content of the polymer B in the separation functional layer 1 is, for example, but not particularly limited to, 1 wt% or more, preferably 5 wt% or more, and more preferably 10 wt% or more. The polymer B tends to have high affinity with the ionic liquid L. Therefore, the higher the content of the polymer B is, the more leakage of the ionic liquid L from the separation functional layer 1 tends to be suppressed. The upper limit of the content of the polymer B is, for example, but not particularly limited to, 20 wt%, and may be 15 wt%.

(Method for manufacturing separation functional layer)

The method for manufacturing the separation functional layer 1 includes, for example, at least one selected from the group consisting of step (i) and step (ii) below.

Step (i): allowing, in a mixed solution M1 containing the ionic liquid L, the polymer A, the prepolymer, and the crosslinking agent, the prepolymer to react with the crosslinking agent in such a manner that the polymer B is formed.

Step (ii): drying a mixed solution M2 containing the ionic liquid L, the polymer A, and the polymer B.

First, a manufacturing method including the step (i) will be explained. The manufacturing method including the step (i) makes it possible to obtain the separation functional layer 1 including the polymer B having a crosslinked structure.

The mixed solution M1 further includes, for example, a solvent such as an organic solvent. Examples of the organic solvent include a polar solvent such as acetone. The concentration of the nonvolatile substances (the ionic liquid L, the polymer A, the prepolymer, and the crosslinking agent) in the mixed solution M1 is, for example, but not particularly limited to, 10 wt% to 90 wt%, and may be 30 wt% to 50 wt%. In the mixed solution M1, the total value of the concentration of the polymer A and the concentration of the components (the prepolymer and the crosslinking agent) forming the polymer B is, for example, but not particularly limited to, 1 wt% to 50 wt%, and may be 1 wt% to 20 wt%.

In the mixed solution M1, the ratio of an amount of substance of the crosslinking agent with respect to an amount of substance of the prepolymer is, for example, but not particularly limited to, 0.1 mol% to 10 mol%, and may be 1 mol% to 5 mol%. The ratio of the amount of substance of the crosslinking agent with respect to the number of all the crosslinking points included in the prepolymer is, for example, but not particularly limited to, 10 mol% to 90 mol%, and may be 25 mol% to 75 mol%.

The mixed solution M1 can be produced by, for example, adding materials, such as the polymer A, to the solvent while the solvent is being stirred. The order in which the materials, such as the polymer A, are added to the solvent is not particularly limited. In one example, the polymer A, the prepolymer, the ionic liquid L, and the crosslinking agent may be added to the solvent in this order.

In a preferred embodiment of the present invention, the mixed solution M1 is applied onto a base material and then the reaction between the prepolymer and the crosslinking agent is made. Typically, the base material is a release liner. Examples of the release liner include: a film including a resin; paper; and a sheet including a metal material such as aluminum or stainless steel. The sheet including a metal material tends to have high heat resistance. The release liner is preferably a film including a resin from the viewpoint of having excellent surface smoothness. Examples of a polymer included in the resin in the release liner include: polyolefin such as polyethylene, polypropylene, polybutene, polybutadiene, or polymethylpentene; polyester such as polyethylene terephthalate, polybutylene terephthalate, or polyethylene naphthalate; polyvinyl chloride and a vinyl chloride copolymer; polyurethane; and an ethylene-vinyl acetate copolymer. Polyester, particularly polyethylene terephthalate, is preferred.

A surface of the release liner may be subjected to a release treatment. The release treatment can be provided by, for example, applying a release treatment agent onto the surface of the release liner. Examples of the release treatment agent include a silicone-based release treatment agent, a long-chain alkyl-based release treatment agent, a fluorine-based release treatment agent, and a molybdenum sulfide-based release treatment agent. One of these release treatment agents may be used alone or two or more of them can be used in combination. The release liner is preferably a polyethylene terephthalate (PET) film subjected to the release treatment.

The thickness of the release liner is, for example, but not particularly limited to, 5 to 100 $\mu$m, and preferably 10 to 50 $\mu$m.

The method for applying the mixed solution M1 onto the base material is not particularly limited, and a method such as a spin coating method or a dip coating method can be used, for example. The mixed solution M1 may be applied onto the base material using an applicator, a wire bar, or the like. A coating film is formed by applying the mixed solution M1 onto the base material.

In another preferred embodiment of the present invention, the mixed solution M1 is put in a mold and then the reaction between the prepolymer and the crosslinking agent is made. The mold is typically a laboratory dish made from PTFE.

It is possible to allow the reaction between the prepolymer and the crosslinking agent to proceed by, for example, heat-treating the mixed solution M1 (specifically, the coating film produced by applying the mixed solution M1 onto the base material, or the mixed solution M1 put in the mold). The temperature of the heat treatment is, for example, but not particularly limited to, 30°C or higher, and may be 50°C to 110°C. The duration of the heat treatment is, for example, 1 minute or longer, and may be 5 minutes or longer. When the reaction between the prepolymer and the crosslinking agent proceeds, the polymer B having a crosslinked structure is formed. Thereby, the separation functional layer 1 including the ionic liquid L, the polymer A, and the polymer B is formed. By peeling off the separation functional layer 1 from the base material or the mold, the separation functional layer 1 that functions as a self-supporting membrane can be obtained.
Next, a manufacturing method including the step (ii) will be explained. The manufacturing method including the step (ii) is suitable for producing the separation functional layer 1 including the polymer B having no crosslinked structure.
The mixed solution M2 has the same composition as that of the mixed solution M1 mentioned above, except that the mixed solution M2 includes the polymer B instead of the prepolymer and the crosslinking agent (that is, the mixed solution M2 includes the ionic liquid L, the polymer A, and the polymer B). For example, it is possible to produce the separation functional layer 1 by drying the mixed solution M2 (specifically, a coating film produced by applying the mixed solution M2 onto the base material, or the mixed solution M2 put in the mold). The temperature of the drying treatment is, for example, but not particularly limited to, 30°C or higher, and may be 50°C to 110°C. The duration of the drying treatment is, for example, 1 minute or longer, and may be 5 minutes or longer.

(Physical properties, etc. of separation functional layer)

The thickness of the separation functional layer 1 is, for example, 500 μm or less, and preferably300 μm or less, and may be 100 μm or less, 50 μm or less, 25 μm or less, 15 μm or less, 10 μm or less, 5.0 μm or less, or 2.0 μm or less. The thickness of the separation functional layer 1 may be 0.05 μm or more, or 0.1 μm or more.
The strength of the separation functional layer 1 tends to be enhanced when the polymer A forms a crystal structure in the ionic liquid L. In one example, when the separation functional layer 1 with a thickness of 300 μm is subjected to a tensile test, the breaking strength of the separation functional layer 1 is, for example, 80 kPa or more, preferably 200 kPa or more, more preferably 500 kPa or more, and still more preferably 700 kPa or more, and may be 900 kPa or more. The upper limit of the breaking strength of the separation functional layer 1 is, for example, but not particularly limited to, 2000 kPa, and may be 1200 kPa. The tensile test on the separation functional layer 1 can be conducted in accordance with the regulation of JIS K7161-1:2014. In the present description, the breaking strength refers to a tensile fracture stress $\sigma_b$ specified in JIS K7161-1:2014.
Leakage of the ionic liquid L from the separation functional layer 1 tends to be suppressed because of the affinity between the polymer B and the ionic liquid L. In one example, the ratio of the weight of the ionic liquid L that leaks from the separation functional layer 1 when the separation functional layer 1 is subjected to a compression test with respect to the weight of the ionic liquid L included in the separation functional layer 1 is, for example, 3.5 wt% or less, preferably 3.0 wt% or less, 2.5 wt% or less, 2.0 wt% or less, 1.5 wt% or less, 1.0 wt% or less, and 0.5 wt% or less, and more preferably 0.1 wt% or less. In the compression test, the ionic liquid L may not substantially leak from the separation functional layer 1. Here, the compression test is conducted by applying a compressive load of 1.16 MPa to the separation functional layer 1 for 2 minutes. The direction in which the compressive load is applied is aligned with a thickness direction of the separation functional layer 1. The compression test is conducted under the condition of the room temperature (25°C).
As described above, the separation functional layer 1 allows an acid gas contained in a gas mixture to preferentially permeate therethrough. In one example, a permeation coefficient C1 of carbon dioxide with respect to the separation functional layer 1 is, for example, 500 Barrer or more, and preferably 700 Barrer or more, and may be 900 Barrer or more, or 1000 Barrer or more. The upper limit of the permeation coefficient C1 is, for example, but not particularly limited to, 3000 Barrer. Here, Barrer means $10^{-10}$•$cm^3$(STP)•cm/(sec-$cm^2$•cmHg). The symbol "$cm^3$(STP)" means the volume of carbon dioxide at 1 atmospheric pressure and 0°C.
The permeation coefficient C1 can be calculated by the following method. First, a gas mixture composed of carbon dioxide and nitrogen is supplied to a space adjacent to one surface of the separation functional layer 1 while a space adjacent to another surface of the separation functional layer 1 is decompressed. Thereby, a permeated fluid that has permeated through the separation functional layer 1 can be obtained. The weight of the permeated fluid and the volume rate of carbon dioxide and the volume rate of nitrogen in the permeated fluid are measured. The permeation coefficient C1 can be calculated from the measurement results. In the above operation, the concentration of the carbon dioxide in the gas mixture is 50 vol% under standard conditions (0°C, 101 kPa). The gas mixture supplied to the space adjacent to the one surface of the separation functional layer 1 has a temperature of 30°C and a pressure of 0.1 MPa. The space adjacent to the other surface of the separation functional layer 1 is decompressed in such a manner that a pressure in the space is lower than an atmospheric pressure in a measurement environment by 0.1 MPa.
Under the above measurement conditions for the permeation coefficient C1, a separation factor $\alpha 1$ of the

separation functional layer 1 for carbon dioxide with respect to nitrogen is, for example, but not particularly limited to, 10 or more, preferably 20 or more, and still more preferably 25 or more. The upper limit of the separation factor $\alpha 1$ is, for example, but not particularly limited to, 100. The separation factor $\alpha 1$ can be calculated by the following formula. It should be noted that, in the following formula, $X_A$ and $X_B$ are respectively the volume rate of the carbon dioxide and the volume rate of the nitrogen in the gas mixture. $Y_A$ and $Y_B$ are respectively the volume rate of the carbon dioxide and the volume rate of the nitrogen in the permeated fluid that has permeated through the separation functional layer 1.

$$\text{Separation factor } \alpha = (Y_A/Y_B)/(X_A/X_B)$$

(Use of separation functional layer)

As a use of the separation functional layer 1 of the present embodiment, there can be mentioned the use for separating an acid gas from a gas mixture containing the acid gas. Examples of the acid gas in the gas mixture include carbon dioxide, hydrogen sulfide, carbonyl sulfide, sulfur oxide (SOx), hydrogen cyanide, and nitrogen oxide (NOx), and preferred is carbon dioxide. The gas mixture contains an additional gas other than the acid gas. Examples of the additional gas include a nonpolar gas such as hydrogen or nitrogen, and an inert gas such as helium, and preferred is nitrogen. Particularly, the separation functional layer 1 of the present embodiment is suitably used for separating carbon dioxide from a gas mixture containing carbon dioxide and nitrogen. However, the use of the separation functional layer 1 is not limited to the use for separating an acid gas from the above-mentioned gas mixture.

<Embodiment of separation membrane>

As shown in FIG. 2, a separation membrane 10 of the present embodiment includes the above-mentioned separation functional layer 1, and further includes, for example, an intermediate layer 2 and a porous support member 3. The porous support member 3 supports the separation functional layer 1. The intermediate layer 2 is disposed between the separation functional layer 1 and the porous support member 3, and is in direct contact with each of the separation functional layer 1 and the porous support member 3.

(Intermediate layer)

The intermediate layer 2 includes, for example, a resin, and further includes nanoparticles dispersed in the resin (matrix). The nanoparticles may be spaced from each other in the matrix, or may aggregate partially. However, the intermediate layer 2 does not need to include the nanoparticles, and may be composed substantially of the resin.

A material of the matrix is not particularly limited, and examples thereof include a silicone resin such as polydimethylsiloxane; a fluorine resin such as polytetrafluoroethylene; an epoxy resin such as polyethylene oxide; a polyimide resin; a polysulfone resin; a polyacetylene resin such as polytrimethylsilylpropyne and polydiphenylacetylene; and a polyolefin resin such as polymethylpentene. The matrix preferably includes a silicone resin.

Each nanoparticle may include an inorganic material. The nanoparticle may include an organic material. The inorganic material included in the nanoparticle is, for example, silica, titania, or alumina. The nanoparticle preferably includes silica.

The nanoparticle may have a surface modified with a modifying group including a carbon atom. The nanoparticle having the surface modified with the modifying group exhibits an excellent dispersibility in the matrix. The nanoparticle is, for example, a silica nanoparticle that may have a surface modified with a modifying group. The modifying group further includes a silicon atom, for example. The surface of the nanoparticle is represented, for example, by the following formulae (I) to (III), the surface being modified with the modifying group.

[Chemical Formula 2]

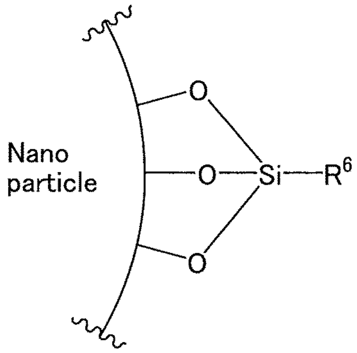

(I)

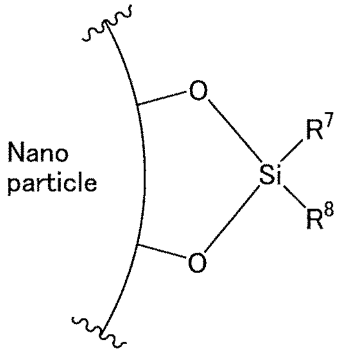

(II)

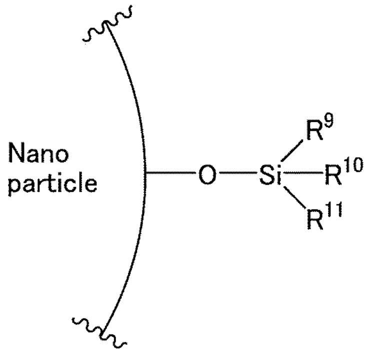

(III)

$R^6$ to $R^{11}$ in the formulae (I) to (III) are each independently an optionally substituted hydrocarbon group. The number of carbon atoms in the hydrocarbon group is not particularly limited as long as it is one or more. The number of carbon atoms in the hydrocarbon group may be, for example, 25 or less, 20 or less, 10 or less, or 5 or less. In some cases, the number of carbon atoms in the hydrocarbon group may be more than 25. The hydrocarbon group may be a linear or branched chain hydrocarbon group, or may be an alicyclic or aromatic cyclic hydrocarbon group. In a preferred embodiment, the hydrocarbon group is a linear or branched alkyl group having 1 to 8 carbon atoms. The hydrocarbon group is, for example, a methyl group or an octyl group, and is preferably a methyl group. The substituent in the hydrocarbon group is, for example, an amino group or an acyloxy group. Examples of the acyloxy group include a (meth)acryloyloxy group.

In another preferred embodiment, the above optionally substituted hydrocarbon group represented by $R^6$ to $R^{11}$ in the formulae (I) to (III) is represented by the following formula (IV). The nanoparticle having a surface modified with a modifying group including the hydrocarbon group represented by the formula (IV) is suitable for improving a permeation rate of an acid gas permeating through the separation membrane 10.

[Chemical Formula 3]

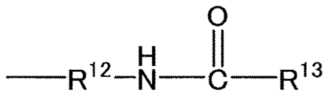

(IV)

In the formula (IV), $R^{12}$ is an optionally substituted alkylene group having 1 to 5 carbon atoms. The alkylene group may be linear or branched. Examples of the alkylene group include a methylene group, an ethylene group, a propane-1,3-diyl group, a butane-1,4-diyl group, and a pentane-1,5-diyl group, and preferred is a propane-1,3-diyl group. Examples of the substituent in the alkylene group include an amide group and an aminoalkylene group.

In the formula (IV), $R^{13}$ is an optionally substituted alkyl group or aryl group having 1 to 20 carbon atoms. The alkyl group may be linear or branched. Examples of the alkyl group and the aryl group include those described above for the ionic liquid L. Examples of the substituents in the alkyl group and the aryl group include an amino group and a carboxyl group. $R^{13}$ is, for example, a 3,5-diaminophenyl group.

The surface of the nanoparticle is preferably represented by the following formula (V), the surface being modified with the modifying group.

[Chemical Formula 4]

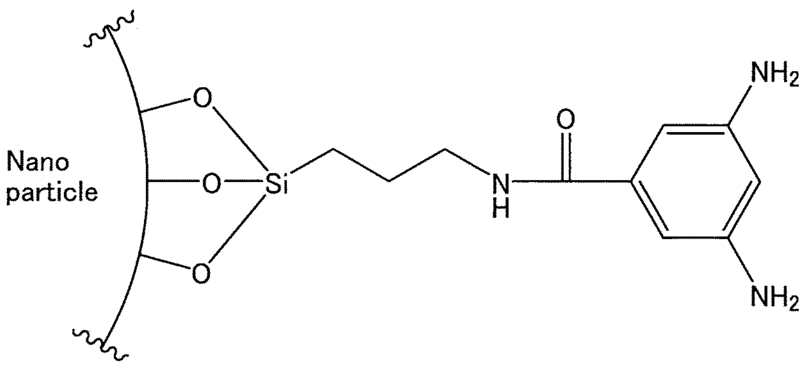

(V)

The modifying group is not limited to have the structures shown in the formulae (I) to (III). The modifying group may include a polymer chain having a polyamide structure or a polydimethylsiloxane structure instead of $R^6$ to $R^{11}$ in the formulae (I) to (III). In the modifying group, for example, this polymer chain is directly bonded to a silicon atom. Examples of the shape of this polymer chain include linear, dendritic, and hyper-branched shapes.

The method for modifying the surface of the nanoparticle with the modifying group is not particularly limited. For example, the surface of the nanoparticle can be modified by allowing a hydroxyl group present on the surface of the nanoparticle to react with a known silane coupling agent. In the case where the modifying group includes a polyamide structure, the surface of the nanoparticle can be modified by, for example, the method disclosed in JP 2010-222228 A.

The average particle size of the nanoparticles is not particularly limited as long as it is on the order of nanometers (< 1000 nm). The average particle size of the nanoparticles is, for example, 100 nm or less, preferably 50 nm or less, and more preferably 20 nm or less. The lower limit of the average particle size of the nanoparticles is, for example, 1 nm. The average particle size of the nanoparticles can be specified by the following method, for example. First, a cross section of the intermediate layer 2 is observed with a transmission electron microscope. In the obtained electron microscope image, the area of a specific nanoparticle is calculated by image processing. The diameter of a circle having the same area as the calculated area is regarded as the particle size (the diameter of the particle) of the specific nanoparticle. The particle size is calculated for any number (at least 50) of the nanoparticles, and the average of the calculated values is regarded as the average particle size of the nanoparticles. The shape of each nanoparticle is not particularly limited, and may be a spherical, ellipsoidal, flaky, or fibrous shape.

The content of the nanoparticles in the intermediate layer 2 is, for example, 5 wt% or more, preferably 10 wt% or more, and more preferably 15 wt% or more. The upper limit of the content of the nanoparticles in the intermediate layer 2 is, for example, but not particularly limited to, 30 wt%.

The thickness of the intermediate layer 2 is, for example, but not particularly limited to, less than 50 μm, preferably 40 μm or less, and more preferably 30 μm or less. The lower limit of the thickness of the intermediate layer 2 is, for example, but not particularly limited to, 1 μm. The intermediate layer 2 is, for example, a layer having a thickness of less than 50 μm.

(Porous support member)

The porous support member 3 supports the separation functional layer 1 via the intermediate layer 2. Examples of the porous support member 3 include: a nonwoven fabric; porous polytetrafluoroethylene; an aromatic polyamide fiber; a porous metal; a sintered metal; a porous ceramic; a porous polyester; porous nylon; an activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 3 may be a combination of two or more of these materials. In one example, the porous support member 3 may be a laminate of a nonwoven fabric and a polysulfone porous layer.

The porous support member 3 has, for example, an average pore diameter of 0.01 to 0.4 μm. The thickness of the porous support member 3 is, for example, but not particularly limited to, 10 μm or more, preferably 20 μm or more, and more preferably 50 μm or more. The thickness of the porous support member 3 is, for example, 300 μm or less, preferably 200 μm or less, and more preferably 150 μm or less.

(Method for producing separation membrane)

The separation membrane 10 can be produced by the following method, for example. First, a laminate of the porous support member 3 and the intermediate layer 2 is prepared. This laminate can be produced by the following method, for example. First, a coating liquid containing the materials of the intermediate layer 2 is prepared. Next, the coating liquid containing the materials of the intermediate layer 2 is applied onto the porous support member 3 to form a coating film. The method for applying the coating liquid is not particularly limited, and a method such as spin coating method or a dip coating method can be used, for example. The coating liquid may be applied, for example, using a wire bar. Next, the coating film is dried to form the intermediate layer 2. The coating film can be dried under heating conditions, for example. The heating temperature of the coating film is, for example, 50°C or higher. The heating duration of the coating film is, for example, one minute or longer, and may be five minutes or longer. Furthermore, the surface of the intermediate layer 2 may be subjected to an adhesion improvement treatment, if necessary. The adhesion improvement treatment is, for example, a surface treatment such as application of a primer, a corona discharge treatment, or a plasma treatment.

Next, the mixed solution M1 (or the mixed solution M2) for forming the separation functional layer 1 is applied onto the intermediate layer 2 in the laminate of the porous support member 3 and the intermediate layer 2. The prepolymer is allowed to react with the crosslinking agent in the obtained coating film by the above-mentioned method, or the coating film is dried. Thereby, the separation functional layer 1 is formed on the intermediate layer 2 and the separation membrane 10 can be obtained. In the present embodiment, the separation functional layer 1 has an enhanced strength. Therefore, it is also possible to form the separation functional layer 1 on the intermediate layer 2 by a roll-to-roll method.

The method for producing the separation membrane 10 is not limited to the above-mentioned method. For example, the separation membrane 10 may be produced by the following method. First, the separation functional layer 1 formed on the base material, such as a release liner, is prepared by the above-mentioned method. Next, the coating liquid containing the materials of the intermediate layer 2 is applied onto the separation functional layer 1, and the applied coating liquid is dried to form the intermediate layer 2. The laminate of the intermediate layer 2 and the separation functional layer 1 is transferred to the porous support member 3. Thereby, the separation membrane 10 can be obtained.

(Characteristics of separation membrane)

The separation membrane 10 of the present embodiment allows an acid gas contained in a gas mixture to preferentially permeate therethrough by having the separation functional layer 1. In an example, a permeation rate T of the carbon dioxide permeating through the separation membrane 10 is, for example, 10 GPU or more, preferably 50 GPU or more, more preferably 100 GPU or more, still more preferably 150 GPU or more, and may be 200 GPU or more, or 300 GPU or more. The upper limit of the permeation rate T is, for example, but not particularly limited to, 1000 GPU. Note that GPU means $10^{-6}$•$cm^3$(STP)/(sec•$cm^2$•cmHg).

Furthermore, a permeation coefficient C2 of carbon dioxide with respect to the separation membrane 10 is, for example, 100 Barrer or more, preferably 500 Barrer or more, more preferably 1000 Barrer or more, and may be 1100 Barrer or more. The upper limit of the permeation coefficient C2 is, for example, but not particularly limited to, 3000 Barrer.

The permeation rate T and the permeation coefficient C2 can be calculated by the method mentioned above for the permeation coefficient C1 of the separation functional layer 1. Here, the gas mixture composed of carbon dioxide and nitrogen is supplied to, for example, a space adjacent to a principal surface 11, on the separation functional layer side, of the separation membrane 10. Furthermore, a space adjacent to a principal surface 12, on the porous support

member side, of the separation membrane 10 is decompressed.

Under the measurement conditions for the permeation rate T and the permeation coefficient C2, a separation factor $\alpha 2$ of the separation membrane 10 for carbon dioxide with respect to nitrogen is, for example, but not particularly limited to, 10 or more, preferably 20 or more, and more preferably 25 or more. The upper limit of the separation factor $\alpha 2$ is, for example, but not particularly limited to, 100. The separation factor $\alpha 2$ can be calculated by the method mentioned above for the separation factor $\alpha 1$.

In the separation membrane 10, the separation functional layer 1 has an enhanced strength. Therefore, even when the separation membrane 10 is subjected to a press test, the separation factor $\alpha 2$ of the separation membrane 10 tends to be hardly lowered. In one example, when the separation membrane 10 is subjected to a press test, the lowering rate of the separation factor $\alpha 2$ of the separation membrane 10 for carbon dioxide with respect to nitrogen is, for example, 20% or less, preferably 10% or less, and more preferably 5% or less. The lower limit of the lowering rate of the separation factor $\alpha 2$ is, for example, but not particularly limited to, 0.5%. The lowering rate of the separation factor $\alpha 2$ can be calculated by the formula below based on a separation factor $\alpha 2_{before}$ of the separation membrane 10 before the press test and a separation factor $\alpha 2_{after}$ of the separation membrane 10 after the press test. Note that the separation factor $\alpha 2$ of the separation membrane 10 is correlated with the separation factor $\alpha 1$ of the separation functional layer 1. Therefore, the lowering rate of the separation factor $\alpha 2$ of the separation membrane 10 can be considered as the lowering rate of the separation factor $\alpha 1$ of the separation functional layer 1.

$$\text{Lowering rate of separation factor } \alpha 2\ (\%) = 100 \times (\alpha 2_{before} - \alpha 2_{after})/\alpha 2_{before}$$

The press test that the separation membrane 10 is subjected to is conducted by the following method. First, as shown in FIG. 3A, the separation membrane 10 is placed on a 1 mm-thick glass plate 50. Here, the porous support member 3 of the separation membrane 10 is brought into contact with the glass plate 50. The separation membrane 10 placed on the glass plate 50 has a principal surface with an area of 100 $cm^2$ and has a rectangular shape when viewed in plane, for example. Next, a laminate of a nonwoven fabric 15 and a porous membrane 16 is placed on the separation functional layer 1 of the separation membrane 10. The porous membrane 16 is typically a polysulfone porous membrane. The nonwoven fabric 15 is made from PET, for example. The laminate of the nonwoven fabric 15 and the porous membrane 16 may have the same configuration as that of the porous support member 3 of the separation membrane 10. Next, the obtained laminate is sandwiched by one pair of test plates 51a and 51b. The test plates 51a 51b each have a thickness of 2 mm and are made from silicone rubber, for example.

Next, the press test is conducted by applying a compressive load of 5 $N/cm^2$ to the separation membrane 10 for 1 hour via the test plates 51a and 51b. The direction in which the compressive load is applied is aligned with a thickness direction of the separation membrane 10. The press test is conducted under the condition of the room temperature (25°C). Note that after the press test, the test plate 51b and the laminate of the porous membrane 16 and the nonwoven fabric 15 are peeled off from the separation membrane 10 as shown in FIG. 3B.

<Embodiment of membrane separation device>

As shown in FIG. 4, a membrane separation device 100 of the present embodiment includes the separation membrane 10 and a tank 20. In the membrane separation device 100, it is also possible to use the separation functional layer 1 alone instead of the separation membrane 10. The tank 20 includes a first chamber 21 and a second chamber 22. The separation membrane 10 is disposed in the tank 20. In the tank 20, the separation membrane 10 separates the first chamber 21 and the second chamber 22 from each other. The separation membrane 10 extends from one of a pair of wall surfaces of the tank 20 to the other.

The first chamber 21 has an inlet 21a and an outlet 21b. The second chamber 22 has an outlet 22a. The inlet 21a, the outlet 21b, and the outlet 22a are each, for example, an opening provided in a wall surface of the tank 20.

Membrane separation using the membrane separation device 100 is performed by the following method, for example. First, a gas mixture 30 containing an acid gas is supplied to the first chamber 21 via the inlet 21a. The concentration of the acid gas in the gas mixture 30 is, for example, but not particularly limited to, 0.01 vol% (100 ppm) or more, preferably 1 vol% or more, more preferably 10 vol% or more, still more preferably 30 vol% or more, and particularly preferably 50 vol% or more, under standard conditions. The upper limit of the concentration of the acid gas in the gas mixture 30 is, for example, but not particularly limited to, 90 vol% under standard conditions.

The pressure in the first chamber 21 may be increased by supplying the gas mixture 30. The membrane separation device 100 may further include a pump (not shown) for increasing the pressure of the gas mixture 30. The pressure of the gas mixture 30 to be supplied to the first chamber 21 is, for example, 0.1 MPa or more, and preferably 0.3 MPa or more.

The pressure in the second chamber 22 may be decreased while the gas mixture 30 is supplied to the first chamber 21. The membrane separation device 100 may further include a pump (not shown) for decreasing the pressure

in the second chamber 22. The pressure in the second chamber 22 may be decreased such that a space in the second chamber 22 has a pressure lower than an atmospheric pressure in a measurement environment by, for example, 10 kPa or more, preferably 50 kPa or more, and more preferably 100 kPa or more.

Supply of the gas mixture 30 to the first chamber 21 allows to obtain, on the other surface side of the separation membrane 10, a permeated fluid 35 in which the acid gas content is higher than in the gas mixture 30. That is, the permeated fluid 35 is supplied to the second chamber 22. The permeated fluid 35 contains, for example, the acid gas as a main component. The permeated fluid 35 may contain a small amount of a gas other than the acid gas. The permeated fluid 35 is discharged outside the tank 20 via the outlet 22a.

The concentration of the acid gas in the gas mixture 30 gradually decreases from the inlet 21a toward the outlet 21b in the first chamber 21. The gas mixture 30 processed in the first chamber 21 (a non-permeated fluid 36) is discharged outside the tank 20 via the outlet 21b.

The membrane separation device 100 of the present embodiment is suitable for flow (continuous) membrane separation. The membrane separation device 100 of the present embodiment may be used for batch membrane separation.

<Modification of membrane separation device>

As shown in FIG. 5, a membrane separation device 110 of the present embodiment includes a central tube 41 and a laminate 42. The laminate 42 includes the separation membrane 10. The laminate 42 may include the separation functional layer 1 alone instead of the separation membrane 10. The membrane separation device 110 is a spiral membrane element.

The central tube 41 has a cylindrical shape. The central tube 41 has, in its surface, a plurality of holes for allowing the permeated fluid 35 to flow into the central tube 41. Examples of a material of the central tube 41 include: a resin such as an acrylonitrile-butadiene-styrene copolymer resin (ABS resin), a polyphenylene ether resin (PPE resin), or a polysulfone resin (PSF resin); and a metal such as stainless steel or titanium. The central tube 41 has an inner diameter in the range of 20 to 100 mm, for example.

The laminate 42 further includes a feed-side flow passage material 43 and a permeation-side flow passage material 44 in addition to the separation membrane 10. The laminate 42 is wound around the central tube 41. The membrane separation device 110 may further include an exterior material (not shown).

For example, a resin net composed of polyphenylene sulfide (PPS) or an ethylene-chlorotrifluoroethylene copolymer (ECTFE) can be used as the feed-side flow passage material 43 and the permeation-side flow passage material 44.

In the membrane separation device 110, a stress is applied to the separation membrane 10 that is in contact with the feed-side flow passage material 43 and the permeation-side flow passage material 44. As described above, the separation functional layer 1 has an enhanced strength in the separation membrane 10, and thus the above-mentioned stress hardly deteriorates the characteristics of the separation membrane 10. In one example, the separation factor $\alpha 2$ of the separation membrane 10 tends to be hardly lowered when compared before and after the production of the membrane separation device 110.

Membrane separation using the membrane separation device 110 is performed by the following method, for example. First, the gas mixture 30 is supplied into one end of the wound laminate 42. The permeated fluid 35 that has permeated through the separation membrane 10 of the laminate 42 moves into the central tube 41. The permeated fluid 35 is discharged outside via the center tube 41. The gas mixture 30 processed by the membrane separation device 110 (the non-permeated fluid 36) is discharged outside from another end of the wound laminate 42. Thus, the acid gas can be separated from the gas mixture 30.

EXAMPLES

Hereinafter, the present invention will be described in more detail by way of Examples and Comparative Examples, but the present invention is not limited to these examples.

[Synthesis of prepolymer (poly(DMAAm-co-NSA))]

First, a refluxing pipe was attached to a three-necked flask to assemble a synthesizing device. A vacuum pump and an $N_2$ cylinder were connected to a three-way cock. While vacuum suction was being performed, five cycles of nitrogen purge were performed, each cycle being an operation of supplying nitrogen once in 2 minutes. After the nitrogen purge, 1,4-dioxane was added into the three-necked flask using a glass syringe. Next, N,N-dimethylacrylamide (DMAAm) (14.6 g, 147.28 mmol), N-acryloyloxysuccinimide (NSA) (1.32 g, 7.80 mmol), and 2,2'-azobisisobutyronitrile (AIBN) (0.256 g, 1.56 mmol) were weighed out and put in a vial bottle in this order and stirred for a few minutes. The molar ratio

between the DMAAm and the NSA (DMAAm/NSA) was 95/5. The obtained mixture was added into the three-necked flask using a syringe. The solution in the three-necked flask was stirred with a stirrer for approximately 10 minutes. Next, the refluxing pipe was connected to a cooling device, and polymerization was performed for 24 hours under reflux using an oil bath set at 60°C.

The solution after the polymerization was transferred to an eggplant flask and subjected to a treatment by an evaporator at 60°C for 30 minutes or longer to remove the 1,4-dioxane from the solution. Next, THF was added into the eggplant flask to dissolve a white solid. Next, the obtained solution was dropped, using a dropper, by one drop at a time to hexane cooled at -10°C while the mixture was being stirred thus to obtain a precipitate. The precipitate was subjected to a treatment using a constant temperature bath at 30°C for 24 hours in a vacuum atmosphere thus to obtain a prepolymer (poly(DMAAm-co-NSA)).

[Synthesis of prepolymer (poly(BA/BMA-co-AA))]

A prepolymer (poly(BA/BMA-co-AA)) was obtained in the same manner as the prepolymer (poly(DMAAm-co-NSA)), except that N-butyl acrylate (BA) (14.25 g, 111.18 mmol), N-butyl methacrylate (BMA) (14.25 g, 100.21 mmol), and acrylic acid (AA) (1.5 g, 20.82 mmol) were used instead of DMAAm and NSA.

[Synthesis of polymer B (PMMA)]

A polymer B (PMMA) was obtained in the same manner as the prepolymer (poly(DMAAm-co-NSA)), except that methyl methacrylate (MMA) (30.0 g, 299.64 mmol) was used instead of DMAAm and NSA.

(Comparative Example 1)

[Production of separation functional layer]

First, silica particles (Aerosil 200), the above-mentioned prepolymer (poly(DMAAm-co-NSA)), diethylene glycol bis(3-aminopropyl) ether as the crosslinking agent for the prepolymer, 1-ethyl-3-methylimidazolium dicyanamide ([EMIM][DCA]) as the ionic liquid, and ethanol were mixed and stirred at the room temperature for 1 minute. Thereby, a mixed solution for forming the separation functional layer was obtained. In the mixed solution, the weight ratio between the silica particles, the prepolymer, and the ionic liquid was 5:15:80. In the mixed solution, the ratio of the amount of substance of the crosslinking agent with respect to the amount of substance of the prepolymer was 2.5 mol%. The ratio of the amount of substance of the crosslinking agent with respect to the number of all the crosslinking points included in the prepolymer was 50 mol%.

Next, the obtained mixed solution was placed in a mold (a laboratory dish) made from PTFE and dried by a dryer at 60°C. Thereby, a first network structure composed of a network of the silica particles and a second network structure composed of a crosslinked product of the prepolymer were formed to obtain a separation functional layer (self-supporting membrane) of Comparative Example 1. This self-supporting membrane was peeled off from the mold to be used.

[Production of separation membrane]

Next, a separation membrane (composite membrane) of Comparative Example 1 was produced in the same manner as the above-mentioned separation functional layer, except that the mixed solution was applied onto a laminate of a porous support member and an intermediate layer under the conditions at 2000 rpm and for 20 seconds using a spin coater. Note that the laminate of a porous support member and an intermediate layer was produced by the following method. First, a 6 wt% decane solution of a silicone resin (YSR3022 available from Momentive Performance Materials Japan LLC.) was applied onto a porous support member. As the porous support member, an ultrafiltration membrane (NTU-3175M available from Nitto Denko Corporation) was used. The decane solution was applied under the condition of a coating thickness of 45.7 μm using a bar coater. Next, the obtained coating film was dried at 130°C for 5 minutes. Thereby, the laminate of the porous support member and an intermediate layer was obtained. The intermediate layer had a thickness of 2 μm.

(Comparative Example 2)

A separation functional layer (self-supporting membrane) and a separation membrane (composite membrane) of Comparative Example 2 were produced in the same manner as in Comparative Example 1, except that the silica particles were not used, 1-ethyl-3-methylimidazolium bis(trifluoromethanesulfonyl)imide ([EMIM][$Tf_2N$]) was used as the

ionic liquid, the weight ratio between the prepolymer and the ionic liquid in the mixed solution was changed to 20:80, and so on.

(Example 1)

[Production of separation functional layer]

First, as the polymer A, a copolymer of vinylidene fluoride and hexafluoropropylene (PVDF-co-HFP, No. 427160-100G, available from Sigma-Aldrich) was prepared. As described above, PVDF-co-HFP can form a crystal structure in an ionic liquid such as [EMIM][$Tf_2$N], [EMIM][DCA], or [EMIM][FSI]. Next, the polymer A was added to acetone and the mixture was stirred for 3 hours. The above-mentioned prepolymer (poly(DMAAm-co-NSA)) was added to the obtained mixed solution and stirred for 1 hour. To this mixed solution, [EMIM][$Tf_2$N] was added as the ionic liquid and stirred for 30 minutes. Furthermore, as the crosslinking agent, diethylene glycol bis(3-aminopropyl) ether was added to this mixed solution and stirred for 3 minutes. Thereby, a mixed solution M1 for forming the separation functional layer was produced. In the mixed solution M1, the weight ratio between the polymer A, the prepolymer, and the ionic liquid was 5:15:80. The concentration of nonvolatile substances in the mixed solution M1 was 39 wt%. In the mixed solution M1, the total value of the concentration of the polymer A and the concentrations of the components (the prepolymer and the crosslinking agent) forming the polymer B was 8 wt%. In the mixed solution M1, the ratio of the amount of substance of the crosslinking agent with respect to the amount of substance of the prepolymer was 2.5 mol%. The ratio of the amount of substance of the crosslinking agent with respect to the number of all the crosslinking points included in the prepolymer was 50 mol%.

Next, the obtained mixed solution M1 was placed in a mold (a laboratory dish) made from PTFE and dried by a dryer at 70°C. Thereby, the polymer B was formed by the reaction between the prepolymer and the crosslinking agent, and thus a separation functional layer (self-supporting membrane) of Example 1 was obtained. This self-supporting membrane was peeled off from the mold to be used. The polymer A and the polymer B formed an IPN structure.

[Production of separation membrane]

Next, a separation membrane (composite membrane) of Example 1 was produced in the same manner as the above-mentioned separation functional layer, except that the mixed solution M1 was applied onto a laminate of a porous support member and an intermediate layer under the conditions at 2000 rpm and for 20 seconds using a spin coater, and the obtained coating film was dried at the temperature of 60°C for 5 minutes. As the laminate of a porous support member and an intermediate layer, the laminate mentioned above in Comparative Example 1 was used.

(Examples 2 and 3)

A separation functional layer (self-supporting membrane) and a separation membrane (composite membrane) of each of Examples 2 and 3 were obtained in the same manner as in Example 1, except that the weight ratio between the polymer A and the prepolymer in the mixed solution M1 was changed as shown in Table 1.

(Example 4)

A separation functional layer (self-supporting membrane) and a separation membrane (composite membrane) of Example 4 were obtained in the same manner as in Example 2, except that the types of the prepolymer and the crosslinking agent in the mixed solution M1 were changed as shown in Table 1. Note that an epoxy-based crosslinking agent (a product named "TETRAD C", 1,3-bis(N,N-diglycidylaminomethyl)cyclohexane, available from MITSUBISHI GAS CHEMICAL COMPANY, INC.) was used as the crosslinking agent in Example 4.

(Example 5)

A separation functional layer (self-supporting membrane) and a separation membrane (composite membrane) of Example 5 were obtained in the same manner as in Example 2, except that a mixed solution M2 containing the above-mentioned polymer B (PMMA) was used instead of the prepolymer and the crosslinking agent.

(Comparative Example 3)

A separation functional layer (self-supporting membrane) and a separation membrane (composite membrane) of Comparative Example 3 were produced in the same manner as in Comparative Example 2, except that the above-mentioned PVDF-co-HFP was used instead of the prepolymer and the crosslinking agent.

(Examples 6 to 10)

A separation functional layer (self-supporting membrane) and a separation membrane (composite membrane) of Examples 6 to 10 were obtained in the same manners as in Example 2, except that the weight ratio between the polymer A, the prepolymer, and the ionic liquid in the mixed solution M1 and the type of the ionic liquid were changed as shown in Table 2.

[Evaluation of characteristics of separation functional layer (self-supporting membrane)]

(Tensile test)

The separation functional layer of each of Examples and Comparative Examples was subjected to a tensile test in the same manner as mentioned above and measured for breaking strength. Tables 1 and 2 show the results.

(Compression test)

The separation functional layer of each of Examples and Comparative Examples was subjected to a compression test in the same manner as mentioned above. Here, the ratio of the weight of the ionic liquid that leaked from the separation functional layer when the separation functional layer was subjected to the compression test with respect to the weight of the ionic liquid L included in the separation functional layer was specified. Tables 1 and 2 show the results.

(Gas permeation test)

By the following method, the separation functional layer of each of Examples and Comparative Examples was measured for the permeation coefficient C1 of carbon dioxide, and the separation factor $\alpha 1$ ($CO_2/N_2$) of the separation functional layer for carbon dioxide with respect to nitrogen was measured. First, each separation functional layer was placed in a metal cell, and the metal cell was sealed with an O-ring so that no leakage would occur. Next, a gas mixture was injected into the metal cell so that the gas mixture would come into contact with one principal surface of the separation functional layer. The gas mixture was composed substantially of carbon dioxide and nitrogen. The concentration of carbon dioxide in the gas mixture was 50 vol% under standard conditions. The gas mixture injected into the metal cell had a temperature of 30°C and a pressure of 0.1 MPa. Next, a space adjacent to another principal surface of the separation functional layer was decompressed using a vacuum pump. This space was decompressed in such a manner that a pressure in the space was lower than an atmospheric pressure in a measurement environment by 0.1 kPa. Accordingly, a permeated fluid was obtained from the other principal surface of the separation functional layer. The permeation coefficient C1 and the separation factor $\alpha 1$ were calculated based on the composition of the obtained permeated fluid, the weight of the permeated fluid, etc. Tables 1 and 2 show the results.

[Evaluation of characteristics of separation membrane (composite membrane)]

(Gas permeation test)

By the method mentioned above for the separation functional layer, the separation membrane of each of Examples and Comparative Examples was measured for the permeation rate T of carbon dioxide and the permeation coefficient C2 of carbon dioxide, and the separation factor $\alpha 2$ ($CO_2/N_2$) of the separation membrane for carbon dioxide with respect to nitrogen was measured. Tables 1 and 2 show the results.

[Table 1]

| | | | | Comparative Example 1 | Comparative Example 2 | Example 1 | Example 2 | Example 3 | Example 4 | Example 5 | Comparative Example 3 |
|---|---|---|---|---|---|---|---|---|---|---|---|
| Composition of separation functional layer | Weight ratio | Polymer A | PVDF-co-HFP | | | 5 | 10 | 15 | 10 | 10 | 20 |
| | | Prepolymer | DMAAm-co-NSA | 15 | 20 | 15 | 10 | 5 | | | |
| | | | BA/BMA-co-AA | | | | | | 10 | | |
| | | Polymer B | PMMA | | | | | | | 10 | |
| | | Ionic liquid | [EMIM][$Tf_2N$] | | 80 | 80 | 80 | 80 | 80 | 80 | 80 |
| | | | [EMIM][DCA] | 80 | | | | | | | |
| | | Inorganic particles | Aerosil200 | 5 | | | | | | | |
| | Ratio of amount of substance (mol%) (*1) | Crosslinking agent | Diethylene glycol bis(3-aminopropyl) ether | 50 | 50 | 50 | 50 | 50 | | | |
| | | | TETRAD C | | | | | | 50 | | |
| Mixed solution for forming separation functional layer | | | Concentration of nonvolatile substances (wt%) | | 38 | 39 | 39 | 39 | 39 | 39 | 39 |
| | | | Concentration of network (wt%) (*2) | | 8 | 8 | 8 | 8 | 8 | 8 | 8 |

(continued)

| | | | Comparative Example 1 | Comparative Example 2 | Example 1 | Example 2 | Example 3 | Example 4 | Example 5 | Comparative Example 3 |
|---|---|---|---|---|---|---|---|---|---|---|
| Characteristics of self-supporting membrane | Tensile test | Breaking strength (kPa) | 15 | 60 | 240 | 720 | 900 | 470 | 810 | 1260 |
| | Compression test | Ratio of leakage amount (wt%) | 0 | 0 | 0.50 | 0.80 | 2.40 | 0.78 | 3.4 | 4 |
| | Gas permeation test | $CO_2$ permeation coefficient C1 (Barrer) | | 1200 | 900 | 780 | 720 | 810 | 690 | 660 |
| | | $CO_2/N_2$ separation factor $\alpha 1$ (-) | | 26 | 26 | 28 | 26 | 28 | 24 | 26 |
| | Thickness of self-supporting membrane (μm) | | Approx. 300 | Approx. 300 | Approx. 300 | Approx. 300 | Approx. 300 | Approx. 300 | Approx. 300 | Approx. 300 |
| Characteristics of composite membrane | Gas permeation test | $CO_2$ permeation rate T (GPU) | 200 | 165 | 135 | 197 | 162 | 159 | 135 | 155 |
| | | $CO_2$ permeation coefficient C2 (Barrer) | 400 | 1256 | 756 | 1044 | 826 | 796 | 675 | 820 |
| | | $CO_2/N_2$ separation factor $\alpha 2$ (-) | 50 | 25 | 23 | 25 | 23 | 29 | 24 | 22 |
| | Thickness of separation functional layer (μm) | | 2 | 8 | 6 | 5 | 5 | 5 | 5 | 5 |

(*1) The ratio of the amount of substance of the crosslinking agent with respect to the number of all the crosslinking points included in the prepolymer.
(*2) The total value of the concentration of the polymer A in the mixed solution and the concentration of the components forming the polymer B (or the concentration of the polymer B).

[Table 2]

| [Table 2] | | | | | | | | | |
|---|---|---|---|---|---|---|---|---|---|
| | | | | Example 6 | Example 7 | Example 2 | Example 8 | Example 9 | Example 10 |
| Composition of separation functional layer | Weight ratio | Polymer A | PVDF-co-HFP | 20 | 15 | 10 | 5 | 10 | 10 |
| | | Prepolymer | DMAAm-co-NSA | 20 | 15 | 10 | 5 | 10 | 10 |
| | | ionic liquid | [EMIM][$Tf_2N$] | 60 | 70 | 80 | 90 | | |
| | | | [EMIM][DCA] | | | | | 80 | |
| | | | [EMIM][FSI] | | | | | | 80 |
| | Ratio of amount of substance (mol%) (*1) | Crosslinking agent | Diethylene glycol bis(3-aminopropyl) ether | 50 | 50 | 50 | 50 | 50 | 50 |
| Mixed solution for forming separation functional layer | | | Concentration of nonvolatile substances (wt%) | 39 | 37 | 39 | 40 | 39 | 39 |
| | | | Concentration of network (wt%) (*2) | 15 | 11 | 8 | 4 | 8 | 8 |
| Characteristics of self-supporting membrane | Tensile test | | Breaking strength (kPa) | 2565 | 1638 | 720 | 110 | 361 | 567 |
| | Compression test | | Ratio of leakage amount (wt%) | 0.04 | 0.02 | 0.80 | 0.81 | 0.27 | 0.03 |
| | Gas permeation test | | $CO_2$ permeation coefficient C1 (Barrer) | | | 780 | 1218 | 656 | 743 |
| | | | $CO_2/N_2$ separation factor $\alpha 1$ (-) | | | 28 | 28 | 56 | 37 |
| | Thickness of self-supporting membrane ($\mu m$) | | | Approx. 300 | Approx. 300 | Approx. 300 | Approx. 300 | Approx. 300 | Approx. 300 |

(continued)

[Table 2]

| | | | | | | | | |
|---|---|---|---|---|---|---|---|---|
| Characteristics of composite membrane | Gas permeation test | $CO_2$ permeation rate T (GPU) | 13 | 70 | 197 | 344 | 114 | 195 |
| | | $CO_2$ permeation coefficient C2 (Barrer) | 244 | 655 | 1044 | 1025 | 1144 | 1369 |
| | | $CO_2/N_2$ separation factor $\alpha 2$ (-) | 18 | 26 | 25 | 19 | 33 | 34 |
| | Thickness of separation functional layer ($\mu$m) | | 19 | 9 | 5 | 3 | 10 | 7 |

(*1) The ratio of the amount of substance of the crosslinking agent with respect to the number of all the crosslinking points included in the prepolymer.
(*2) The total value of the concentration of the polymer A in the mixed solution and the concentration of the components forming the polymer B.

As understood from Tables 1 and 2, the separation functional layer (self-supporting membrane) of each of Examples including the polymer A and the polymer B exhibited more suppressed leakage of the ionic liquid and had a more enhanced strength than those of the separation functional layers of Comparative Examples.

As understood from Table 2, the separation membrane of each of Examples tended to exhibit higher carbon dioxide permeability as the weight ratio of the ionic liquid in the separation functional layer increased. Furthermore, as understood from the results of Examples 2, 9, and 10, when [EMIM][FSI] was used as the ionic liquid, the separation membrane tended to exhibit even higher carbon dioxide permeability.

[Press test]

The separation membrane (composite membrane) of each of Comparative Example 1 and Example 2 was subjected to the above-mentioned press test. Table 3 shows the permeation rates T and the separation factors $\alpha 2$ before and after the press test. Furthermore, after the press test was conducted, a surface of the separation functional layer in the separation membrane was observed with a scanning electron microscope. FIGs. 6 and 7 show the results.

[Table 3]

<table>
<tr><td colspan="4"></td><td colspan="2">Comparative Example 1</td><td colspan="2">Example 2</td></tr>
<tr><td rowspan="6">Composition of separation functional layer</td><td rowspan="5">Weight ratio</td><td>Polymer A</td><td>PVDF-co-HFP</td><td colspan="2"></td><td colspan="2">10</td></tr>
<tr><td>Prepolymer</td><td>DMAAm-co-NSA</td><td colspan="2">15</td><td colspan="2">10</td></tr>
<tr><td rowspan="2">Ionic liquid</td><td>[EMIM][$Tf_2N$]</td><td colspan="2"></td><td colspan="2">80</td></tr>
<tr><td>[EMIM][DCA]</td><td colspan="2">80</td><td colspan="2"></td></tr>
<tr><td>Inorganic particles</td><td>Aerosil200</td><td colspan="2">5</td><td colspan="2"></td></tr>
<tr><td>Ratio of amount of substance (mol%) (*1)</td><td>Crosslinking agent</td><td>Diethylene glycol bis(3-aminopropyl) ether</td><td colspan="2">50</td><td colspan="2">50</td></tr>
<tr><td colspan="3" rowspan="2">Mixed solution for forming separation functional layer</td><td>Concentration of nonvolatile substances (wt%)</td><td colspan="2"></td><td colspan="2">39</td></tr>
<tr><td>Concentration of network (wt%) (*2)</td><td colspan="2"></td><td colspan="2">8</td></tr>
<tr><td rowspan="5">Characteristics of composite membrane</td><td colspan="2" rowspan="4">Gas permeation test</td><td>Press test</td><td>Before</td><td>After</td><td>Before</td><td>After</td></tr>
<tr><td>$CO_2$ permeation rate T (GPU)</td><td>200</td><td>225</td><td>197</td><td>153</td></tr>
<tr><td>$CO_2/N_2$ separation factor $\alpha 2$ (-)</td><td>50</td><td>34</td><td>25</td><td>24</td></tr>
<tr><td>Lowering rate of $CO_2/N_2$ separation factor $\alpha 2$ (%)</td><td colspan="2">32</td><td colspan="2">4</td></tr>
<tr><td colspan="3">Thickness of separation functional layer (μm)</td><td colspan="2">2</td><td colspan="2">5</td></tr>
<tr><td colspan="8">(*1) The ratio of the amount of substance of the crosslinking agent with respect to the number of all the crosslinking points included in the prepolymer.<br>(*2) The total value of the concentration of the polymer A in the mixed solution and the concentration of the components forming the polymer B.</td></tr>
</table>

As understood from Table 3, the separation membrane of Example 2 had a smaller value of the lowering rate of the separation factor $\alpha 2$ than that of the separation membrane of Comparative Example 1. Furthermore, as shown in FIG. 6, peeling of the separation functional layer occurred on the separation membrane of Comparative Example 1

due to the press test. In contrast, as shown in FIG. 7, the peeling of the separation functional layer due to the press test was not observed in the separation membrane of Example 2. It is inferred that the separation factor $\alpha 2$ was significantly lowered in Comparative Example 1 because of the peeling of the separation functional layer due to the press test. Note that the pattern observed in FIG. 7 derived from the nonwoven fabric that the separation functional layer came into contact with when the press test was conducted.

INDUSTRIAL APPLICABILITY

The separation functional layer and the separation membrane of the present embodiment are suitable for separating an acid gas from a gas mixture containing the acid gas. In particular, the separation functional layer and the separation membrane of the present embodiment are suitable for separating carbon dioxide from an off-gas from a chemical plant or a thermal power plant.

## Claims

**1.** A separation functional layer comprising:

an ionic liquid;
a polymer A that forms a crystal structure in the ionic liquid; and
a polymer B different from the polymer A.

**2.** The separation functional layer according to claim 1, wherein the polymer A is a fluorine-based polymer.

**3.** A separation functional layer comprising:

an ionic liquid;
a polymer A that is a fluorine-based polymer; and
a polymer B different from the polymer A.

**4.** The separation functional layer according to claim 1 or 3, wherein the polymer B has a crosslinked structure.

**5.** The separation functional layer according to claim 1 or 3, wherein the polymer A and the polymer B form an interpenetrating polymer network structure.

**6.** The separation functional layer according to claim 1 or 3, wherein the polymer A is a copolymer of a monomer a1 partially fluorinated and a monomer a2 fully fluorinated.

**7.** The separation functional layer according to claim 1 or 3, wherein the polymer A is a copolymer of vinylidene fluoride and hexafluoropropylene.

**8.** The separation functional layer according to claim 1 or 3, wherein the polymer B is a (meth)acrylic polymer.

**9.** The separation functional layer according to claim 1 or 3, wherein the polymer B includes at least one selected from the group consisting of a structure derived from a copolymer of N,N-dimethylacrylamide and N-acryloyloxysuccinimide, and a structure derived from a copolymer of n-butyl (meth)acrylate and (meth)acrylic acid.

**10.** The separation functional layer according to claim 1 or 3, wherein the polymer B is a crosslinked product obtained by using at least one crosslinking agent selected from the group consisting of an amine-based crosslinking agent and an epoxy-based crosslinking agent.

**11.** The separation functional layer according to claim 1 or 3, wherein the ionic liquid contains an imidazolium ion.

**12.** The separation functional layer according to claim 1 or 3, wherein the ionic liquid contains at least one selected from the group consisting of 1-ethyl-3-methylimidazolium bis(trifluoromethanesulfonyl)imide, 1-ethyl-3-methylimidazolium dicyanamide, and 1-ethyl-3-methylimidazolium bis(fluorosulfonyl)imide.

**13.** The separation functional layer according to claim 1 or 3, wherein a content of the ionic liquid is 60 wt% or more.

**14.** The separation functional layer according to claim 1 or 3, being for use in separating carbon dioxide from a gas mixture containing carbon dioxide and nitrogen.

**15.** A separation membrane comprising:

the separation functional layer according to claim 1 or 3; and
a porous support member supporting the separation functional layer.

**16.** The separation membrane according to claim 15, wherein when the separation membrane is subjected to a press test, a lowering rate of a separation factor $\alpha$ of the separation membrane for carbon dioxide with respect to nitrogen is 20% or less,
the press test being conducted by applying a compressive load of 5 $N/cm^2$ to the separation membrane for 1 hour.

**17.** A method for manufacturing a separation functional layer including an ionic liquid, a polymer A that forms a crystal structure in the ionic liquid, and a polymer B different from the polymer A, the method comprising
at least one selected from the group consisting of step (i) and step (ii) below.

Step (i): allowing, in a mixed solution M1 containing the ionic liquid, the polymer A, a prepolymer, and a crosslinking agent, the prepolymer to react with the crosslinking agent in such a manner that the polymer B is formed.
Step (ii): drying a mixed solution M2 containing the ionic liquid, the polymer A, and the polymer B.

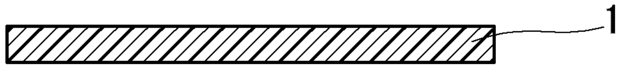


FIG.1

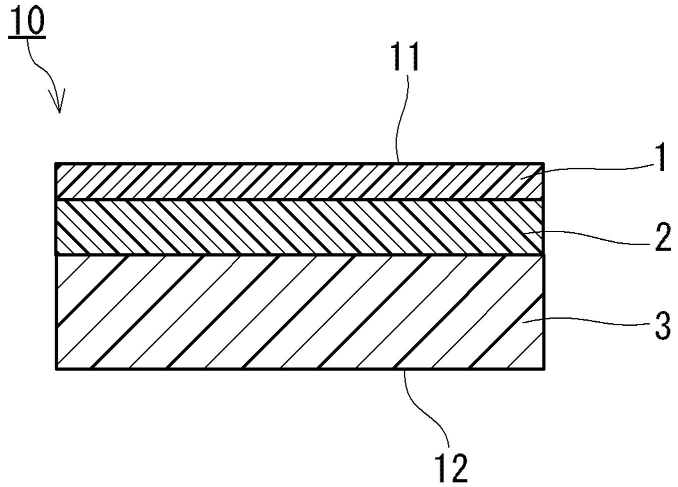


FIG.2

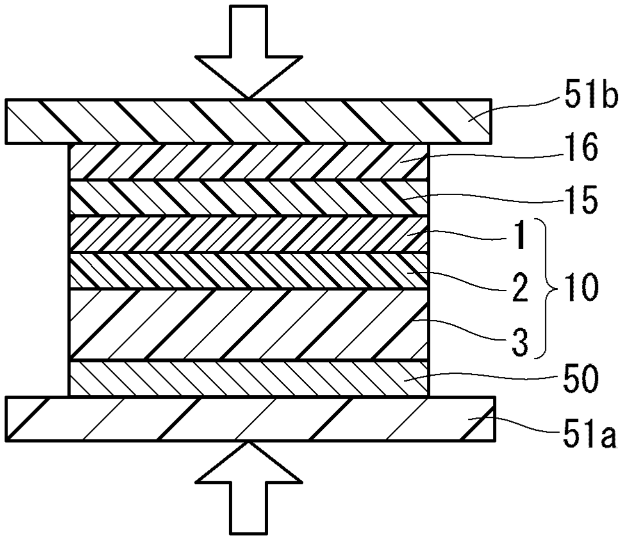


FIG.3A

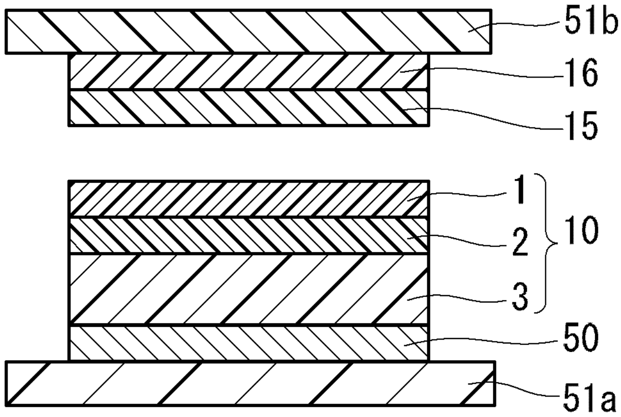


FIG.3B

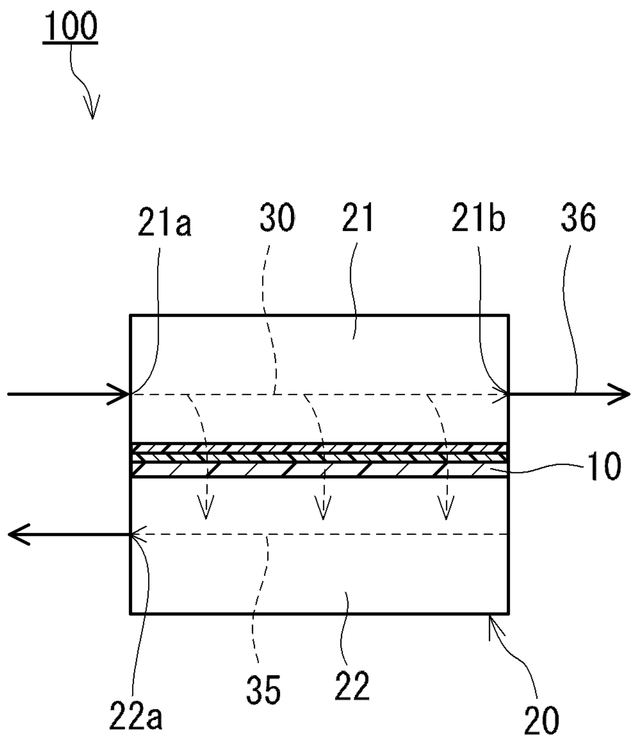


FIG.4

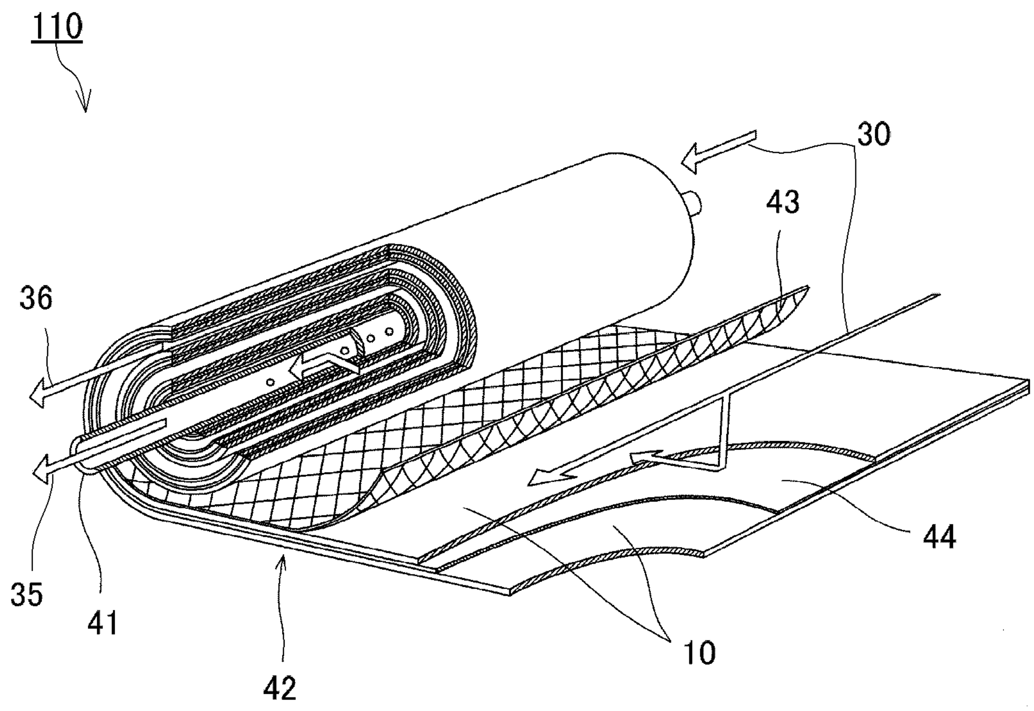


FIG.5

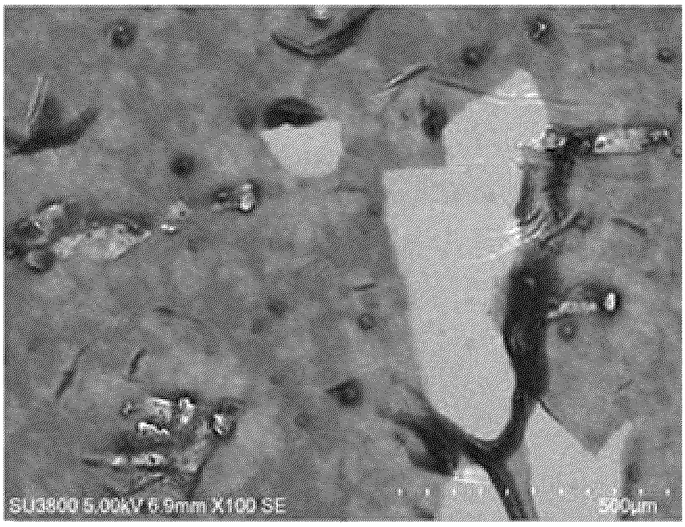


FIG.6

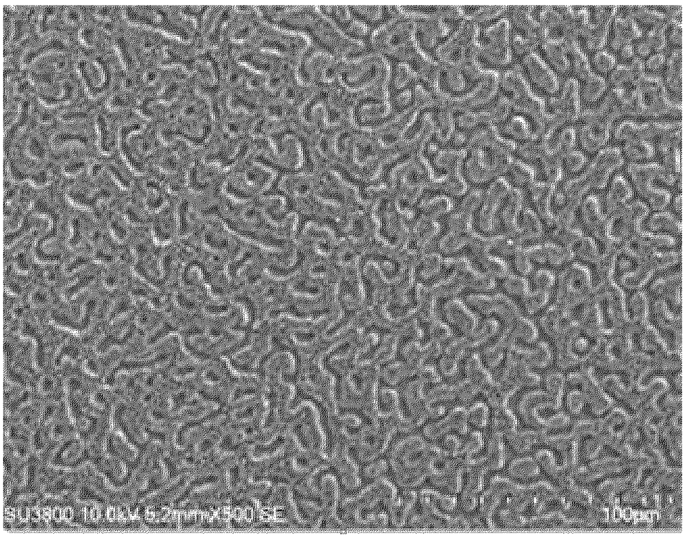


FIG.7

## INTERNATIONAL SEARCH REPORT

International application No.
**PCT/JP2022/031637**

**A. CLASSIFICATION OF SUBJECT MATTER**

***B01D 69/00***(2006.01)i; ***B01D 69/10***(2006.01)i; ***B01D 69/12***(2006.01)i; ***B01D 71/32***(2006.01)i; ***B01D 71/34***(2006.01)i; ***B01D 71/40***(2006.01)i
FI: B01D69/00 500; B01D69/10; B01D69/12; B01D71/32; B01D71/34; B01D71/40

According to International Patent Classification (IPC) or to both national classification and IPC

**B. FIELDS SEARCHED**

Minimum documentation searched (classification system followed by classification symbols)

B01D61/00-71/82; B01D53/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); Japio-GPG/FX

**C. DOCUMENTS CONSIDERED TO BE RELEVANT**

| Category* | Citation of document, with indication, where appropriate, of the relevant passages | Relevant to claim No. |
|---|---|---|
| Y | WO 2020/195911 A1 (NITTO DENKO CORP.) 01 October 2020 (2020-10-01) paragraphs [0001]-[0096], fig. 1-15 | 1-6, 8-16 |
| Y<br>X | WO 2017/209064 A1 (SUMITOMO CHEMICAL CO., LTD.) 07 December 2017 (2017-12-07) paragraphs [0001]-[0139], fig. 1-8 | 1-6, 8-16<br>17 |
| Y | WO 2018/211945 A1 (DAICEL CORP.) 22 November 2018 (2018-11-22) paragraphs [0001]-[0166], fig. 1, 2 | 1-6, 8-16 |
| A | JP 2016-077997 A (KOBE UNIVERSITY) 16 May 2016 (2016-05-16) paragraphs [0001]-[0098], fig. 1-14 | 1-17 |
| A | WO 2013/024594 A1 (NITTO DENKO CORP.) 21 February 2013 (2013-02-21) claims 1-9 | 1-17 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 October 2022** | **18 October 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/031637**

| Patent document cited in search report | Publication date (day/month/year) | Patent family member(s) | Publication date (day/month/year) |
|---|---|---|---|
| WO 2020/195911 A1 | 01 October 2020 | EP 3950102 A1<br>paragraphs [0001]-[0096], fig. 1-15<br>CN 113631245 A<br>KR 10-2021-0141530 A | |
| WO 2017/209064 A1 | 07 December 2017 | US 2020/0316529 A1<br>paragraphs [0001]-[0139], fig. 1-8<br>EP 3466987 A1<br>CN 109312011 A<br>TW 201835130 A | |
| WO 2018/211945 A1 | 22 November 2018 | US 2021/0154622 A1<br>paragraphs [0001]-[0171], fig. 1, 2<br>EP 3626334 A1<br>CN 110662597 A | |
| JP 2016-077997 A | 16 May 2016 | (Family: none) | |
| WO 2013/024594 A1 | 21 February 2013 | US 2014/0165837 A1<br>claims 1-9 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020037688 A
- JP 2010222228 A